# EUROPEAN PATENT APPLICATION

(11) **EP 4 440 167 A1**
(43) Date of publication of application: **02.10.2024**
(21) Application number: 22914511.5
(22) Date of filing: 23.12.2022
(51) Int. Cl.: H04W 8/24, H04W 56/00

(54) **CLOCK INFORMATION CHECK METHOD, APPARATUS AND SYSTEM**

(30) Priority: 28.12.2021 CN 202111624034
(71) Applicant: Huawei Technologies Co., Ltd., Shenzhen, Guangdong 518129 (CN)
(72) Inventor: ZHOU, Guangjian, Shenzhen, Guangdong 518129 (CN)
(74) Representative: Körber, Martin Hans
(86) International application number: PCT/CN2022/141232
(87) International publication number: WO 2023/125257

(57) **Abstract**

This application provides a method for checking clock information, an apparatus, and a system, and pertains to the field of communication technologies. In this application, a baseband unit obtains information provided by a radio frequency unit to assist in determining whether clock information provided by a time serving unit is available, thereby avoiding service interference caused by using inaccurate clock information, and helping improve reliability of system clock synchronization.

## Description

This application claims priority to Chinese Patent Application No. 202111624034.4, filed with the China National Intellectual Property Administration on December 28, 2021 and entitled "METHOD FOR CHECKING CLOCK INFORMATION, APPARATUS, AND SYSTEM", which is incorporated herein by reference in its entirety.

### TECHNICAL FIELD

This application relates to the field of communication technologies, and in particular, to a method for checking clock information, an apparatus, and a system.

### BACKGROUND

A time serving unit is installed in many communication systems nowadays. The time serving unit is configured to provide clock information based on a received satellite signal, so that the communication system performs clock synchronization based on the clock information.

Affected by interference sources such as pseudo satellites, the information determined by the time serving unit based on the received signal may not be accurate. Therefore, it is necessary to check whether the clock information provided by the time serving unit is available, to prevent inaccurate clock information from affecting a service.

### SUMMARY

Embodiments of this application provide a method for checking clock information, an apparatus, and a system, to prevent inaccurate clock information from affecting a service. The technical solutions are as follows.

According to a first aspect, a method for checking clock information is provided, where the method includes: obtaining first information through a time serving unit of a communication system; obtaining information about at least one radio frequency unit of the communication system; and determining, based on the information about the at least one radio frequency unit and the first information, whether the clock information provided by the time serving unit is available.

In the foregoing method, a baseband unit obtains information provided by a radio frequency unit to assist in determining whether clock information provided by a time serving unit is available, thereby avoiding service interference caused by using inaccurate clock information, and helping improve reliability of system clock synchronization.

Optionally, the information about the radio frequency unit is geographical location information of the radio frequency unit; and the first information is geographical location information obtained by the time serving unit based on a signal received by the time serving unit.

In the foregoing optional manner, a location of the radio frequency unit is equivalent to a known reference location. If a location determined by the time serving unit is inaccurate due to interference to the time serving unit, a deviation between the location determined by the time serving unit and the known reference location is excessively large. Therefore, whether the clock information provided by the time serving unit is available is determined based on the geographical location provided by the radio frequency unit and the geographical location provided by the time serving unit, to help improve accuracy of a determining result.

Optionally, the information about the radio frequency unit is clock information of the radio frequency unit; and the first information is clock information obtained by the time serving unit based on a signal received by the time serving unit.

In the foregoing optional manner, a clock of the time serving unit is equivalent to a trusted clock. If a location determined by the time serving unit is inaccurate due to interference to the time serving unit, a deviation between time determined by the time serving unit and the trusted clock is excessively large. Therefore, whether the clock information provided by the time serving unit is available is determined based on the clock provided by the radio frequency unit and the clock provided by the time serving unit, to help improve accuracy of a determining result.

Optionally, the clock information of the radio frequency unit or the clock information provided by the time serving unit includes at least one of time information, frequency information, or phase information.

The foregoing optional manner helps support various scenarios such as time synchronization, frequency synchronization, and phase synchronization, and improves flexibility.

Optionally, the determining, based on the information about the at least one radio frequency unit and the first information, whether the clock information provided by the time serving unit is available includes: obtaining at least one deviation based on the information about the at least one radio frequency unit and the first information; and determining, based on the at least one deviation and a threshold, whether the clock information provided by the time serving unit is available.

Optionally, the determining, based on the information about the at least one radio frequency unit and the first information, whether the clock information provided by the time serving unit is available includes any one of and a combination of the following: determining, based on a fact that each deviation in the at least one deviation is greater than the threshold, that the clock information provided by the time serving unit is unavailable; determining, based on a fact that one of the at least one deviation is greater than the threshold, that the clock information provided by the time serving unit is unavailable; determining, based on a fact that deviations greater than the threshold in the at least one deviation reach a set proportion, that the clock information provided by the time serving unit is unavailable; or determining, based on a fact that deviations greater than the threshold in the at least one deviation reach a set quantity, that the clock information provided by the time serving unit is unavailable.

In the foregoing optional manner, information provided by a plurality of radio frequency units is comprehensively considered. Even if information provided by a particular radio frequency unit is incorrect, accuracy of the determining result can be ensured by using information provided by another radio frequency unit. Therefore, a fault tolerance capability is improved.

Optionally, the deviation includes at least one of a spatial distance, a time difference, a frequency deviation, or a phase deviation.

In the foregoing optional manner, determining is performed with reference to a plurality of dimensions such as space, time, frequency, and phase, so that reference information for determining is more abundant and comprehensive, and this helps improve accuracy of the determining result.

Optionally, the obtaining first information through a time serving unit of a communication system includes any one of and a combination of the following: receiving the first information output by the time serving unit; or determining the first information based on information output by the time serving unit.

Optionally, the obtaining information about at least one radio frequency unit of the communication system includes any one of and a combination of the following:
receiving the information about the at least one radio frequency unit from the at least one radio frequency unit; or receiving the information about the at least one radio frequency unit from a network management device.

Optionally, after the determining, based on the information about the at least one radio frequency unit and the first information, whether the clock information provided by the time serving unit is available, the method further includes any one of and a combination of the following: using the clock information provided by the time serving unit if the clock information is available; using clock information provided by another element other than the time serving unit if the clock information is unavailable; or entering a clock holdover mode if the clock information is unavailable.

In the foregoing optional manner, when it is determined that the clock information of the time serving unit is unavailable, another element is used as a clock source or the clock holdover mode is entered, to avoid service interference caused by inaccurate clock source tracing.

Optionally, the radio frequency unit and the time serving unit are deployed in a same base station.

The foregoing optional manner supports a scenario in which the baseband unit determines whether a local time serving unit is available based on information provided by a radio frequency unit of the local site.

Optionally, the radio frequency unit and the time serving unit are deployed in different base stations.

The foregoing optional manner supports a scenario in which the baseband unit determines, by using information provided by a radio frequency unit of a neighboring site or a remote site, whether a local time serving unit is available, and application scenarios are more diversified.

Optionally, the time serving unit is deployed in a baseband unit; or the time serving unit is deployed in one of the at least one radio frequency unit.

The foregoing optional manner supports a scenario in which the baseband unit determines whether a local time serving unit is available and a scenario in which the baseband unit determines whether a time serving unit in a radio frequency unit is available, and application scenarios are more diversified.

Optionally, the method is performed by a baseband unit, or the method is performed by one of the at least one radio frequency unit.

According to a second aspect, a method for checking clock information is provided, performed by a radio frequency unit in a communication system, where the method includes: obtaining information about the radio frequency unit; and sending the information about the radio frequency unit to a baseband unit in the communication system, where the information about the radio frequency unit is used by the baseband unit to determine whether clock information provided by a first time serving unit in the communication system is available.

Optionally, the information about the radio frequency unit is geographical location information of the radio frequency unit.

Optionally, the obtaining information about the radio frequency unit includes any one of and a combination of the following: obtaining the geographical location information of the radio frequency unit pre-stored in the radio frequency unit; obtaining the geographical location information of the radio frequency unit through a second time serving unit; receiving the geographical location information of the radio frequency unit from a network management device; or obtaining the geographical location information of the radio frequency unit through a positioning unit.

Optionally, the information about the radio frequency unit is clock information of the radio frequency unit.

Optionally, the obtaining information about the radio frequency unit includes: obtaining the clock information of the radio frequency unit through a second time serving unit.

According to a third aspect, a communication apparatus is provided, where the apparatus includes:
an obtaining module, configured to obtain first information through a time serving unit of a communication system, where
the obtaining module is further configured to obtain information about at least one radio frequency unit of the communication system; and
a determining module, configured to determine, based on the information about the at least one radio frequency unit and the first information, whether the clock information provided by the time serving unit is available.

Optionally, the information about the radio frequency unit is geographical location information of the radio frequency unit; and
the first information is geographical location information obtained by the time serving unit based on a signal received by the time serving unit.

Optionally, the information about the radio frequency unit is clock information of the radio frequency unit; and
the first information is clock information obtained by the time serving unit based on a signal received by the time serving unit.

Optionally, the clock information of the radio frequency unit or the clock information provided by the time serving unit includes at least one of time information, frequency information, or phase information.

Optionally, the determining module is configured to:
obtain at least one deviation based on the information about the at least one radio frequency unit and the first information; and
determine, based on the at least one deviation and a threshold, whether the clock information provided by the time serving unit is available.

Optionally, the determining module is configured to perform any one of and a combination of the following:
determine, based on a fact that each deviation in the at least one deviation is greater than the threshold, that the clock information provided by the time serving unit is unavailable;
determine, based on a fact that one of the at least one deviation is greater than the threshold, that the clock information provided by the time serving unit is unavailable;
determine, based on a fact that deviations greater than the threshold in the at least one deviation reach a set proportion, that the clock information provided by the time serving unit is unavailable; or
determine, based on a fact that deviations greater than the threshold in the at least one deviation reach a set quantity, that the clock information provided by the time serving unit is unavailable.

Optionally, the deviation includes at least one of a spatial distance, a time difference, a frequency deviation, or a phase deviation.

Optionally, the obtaining module is configured to perform any one of and a combination of the following:
receive the first information output by the time serving unit; or
determine the first information based on information output by the time serving unit.

Optionally, the obtaining module is configured to perform any one of and a combination of the following:
receive the information about the at least one radio frequency unit from the at least one radio frequency unit; or
receive the information about the at least one radio frequency unit from a network management device.

Optionally, the apparatus further includes a processing module, and the processing module is configured to perform any one of and a combination of the following:
use the clock information provided by the time serving unit if the clock information is available;
use clock information provided by another element other than the time serving unit if the clock information is unavailable; or
enter a clock holdover mode if the clock information is unavailable.

In some embodiments, units in the communication apparatus are implemented by using software, and the units in the communication apparatus are program modules. In some other embodiments, the units in the communication apparatus are implemented by using hardware or firmware. For specific details of the communication apparatus provided in the third aspect, refer to the first aspect or any optional manner of the first aspect. Details are not described herein again.

According to a fourth aspect, a communication apparatus is provided, where the communication apparatus is disposed in a radio frequency unit, and the apparatus includes:
an obtaining module, configured to obtain information about the radio frequency unit; and
a sending module, configured to send the information about the radio frequency unit to a baseband unit in the communication system, where the information about the radio frequency unit is used by the baseband unit to determine whether clock information provided by a first time serving unit in the communication system is available.

Optionally, the information about the radio frequency unit is geographical location information of the radio frequency unit.

Optionally, the obtaining module is configured to perform any one of and a combination of the following:
obtain the geographical location information of the radio frequency unit pre-stored in the radio frequency unit;
obtain the geographical location information of the radio frequency unit through a second time serving unit;
receive the geographical location information of the radio frequency unit from a network management device; or
obtain the geographical location information of the radio frequency unit through a positioning unit.

Optionally, the information about the radio frequency unit is clock information of the radio frequency unit.

Optionally, the obtaining module is configured to obtain the clock information of the radio frequency unit through a second time serving unit.

In some embodiments, units in the communication apparatus are implemented by using software, and the units in the communication apparatus are program modules. In some other embodiments, the units in the communication apparatus are implemented by using hardware or firmware. For specific details of the communication apparatus provided in the fourth aspect, refer to the second aspect or any optional manner of the second aspect. Details are not described herein again.

According to a fifth aspect, a communication apparatus is provided, where the communication apparatus includes a processor, the processor is coupled to a memory, the memory stores at least one computer program instruction, and the at least one computer program instruction is loaded and executed by the processor, so that the communication apparatus implements the method provided in the first aspect or any optional manner of the first aspect. For specific details of the communication apparatus provided in the fifth aspect, refer to the first aspect or any optional manner of the first aspect. Details are not described herein again.

According to a sixth aspect, a communication apparatus is provided, where the communication apparatus includes a processor, the processor is coupled to a memory, the memory stores at least one computer program instruction, and the at least one computer program instruction is loaded and executed by the processor, so that the communication apparatus implements the method provided in the second aspect or any optional manner of the second aspect. For specific details of the communication apparatus provided in the sixth aspect, refer to the second aspect or any optional manner of the second aspect. Details are not described herein again.

According to a seventh aspect, a computer-readable storage medium is provided. The storage medium stores at least one instruction. When the instruction is run on a computer, the computer is enabled to perform the method provided in the first aspect or any optional manner of the first aspect.

According to an eighth aspect, a computer-readable storage medium is provided. The storage medium stores at least one instruction. When the instruction is run on a computer, the computer is enabled to perform the method provided in the second aspect or any optional manner of the second aspect.

According to a ninth aspect, a computer program product is provided. The computer program product includes one or more computer program instructions, and when the computer program instructions are loaded and executed by a computer, the computer is enabled to perform the method provided in the first aspect or any optional manner of the first aspect.

According to a tenth aspect, a computer program product is provided. The computer program product includes one or more computer program instructions, and when the computer program instructions are loaded and executed by a computer, the computer is enabled to perform the method provided in the second aspect or any optional manner of the second aspect.

According to an eleventh aspect, a chip is provided. The chip includes a programmable logic circuit and/or a program instruction, and when the chip runs, the chip is configured to implement the method provided in the first aspect or any optional manner of the first aspect.

According to a twelfth aspect, a chip is provided, where the chip includes a programmable logic circuit and/or a program instruction, and when the chip runs, the chip is configured to implement the method provided in the second aspect or any optional manner of the second aspect.

According to a thirteenth aspect, a communication system is provided. The communication system includes the communication apparatus according to the third aspect and the communication apparatus according to the fourth aspect; or the communication system includes the communication apparatus according to the fifth aspect and the communication apparatus according to the sixth aspect.

### BRIEF DESCRIPTION OF DRAWINGS

FIG. 1 is a schematic diagram of a fronthaul network in a distributed base station according to an embodiment of this application;
FIG. 2 is a schematic diagram of a communication system 10 according to an embodiment of this application;
FIG. 3 is a flowchart of a method for checking clock information according to an embodiment of this application;
FIG. 4 is a schematic diagram of an application scenario according to an embodiment of this application;
FIG. 5 is a schematic diagram of an application scenario according to an embodiment of this application;
FIG. 6 is a schematic diagram of influence of mutual interference between base stations according to an embodiment of this application;
FIG. 7 is a schematic diagram of an application scenario according to an embodiment of this application;
FIG. 8 is a schematic diagram of an application scenario according to an embodiment of this application;
FIG. 9 is a schematic diagram of an application scenario according to an embodiment of this application;
FIG. 10 is a schematic diagram of clock processing performed by a BBU according to an embodiment of this application;
FIG. 11 is a schematic diagram of writing longitude and latitude information during AAU deployment according to an embodiment of this application;
FIG. 12 is a schematic diagram in which a BBU obtains longitude and latitude information of an AAU from the AAU according to an embodiment of this application;
FIG. 13 is a schematic diagram of deploying a GNSS receiver in an AAU to obtain location information according to an embodiment of this application;
FIG. 14 is a schematic diagram in which a BBU obtains longitude and latitude information of an AAU from the AAU according to an embodiment of this application;
FIG. 15 is a schematic diagram in which a BBU obtains longitude and latitude information of an AAU from the AAU according to an embodiment of this application;
FIG. 16 is a schematic diagram of a structure of a communication apparatus 300 according to an embodiment of this application;
FIG. 17 is a schematic diagram of a structure of a communication apparatus 400 according to an embodiment of this application; and
FIG. 18 is a schematic diagram of a structure of a communication apparatus according to an embodiment of this application.

### DESCRIPTION OF EMBODIMENTS

To make the objectives, technical solutions, and advantages of this application clearer, the following further describes implementations of this application in detail with reference to the accompanying drawings.

The following explains and describes some terms and concepts in embodiments of this application.

### (1) Base station

A base station is a wireless communication site installed at a fixed location in a cellular mobile communication network. A main function of the base station is to provide wireless coverage and support communication between a terminal and a core network. The base station includes but is not limited to an evolved NodeB (evolutional Node B, eNB or eNodeB) in Long Term Evolution (Long Term Evolution, LTE), a base station (gNodeB, gNB) in a 5G (the fifth generation) network such as new radio (New Radio, NR), and the like. A physical structure of a base station mainly includes a baseband unit (Baseband Unit, BU) and a radio frequency unit (Radio Unit, RU).

### (2) Baseband unit

A BU is a module or an apparatus that has a baseband signal processing function and/or an RU management function. Baseband signal processing includes channel coding, multiplexing, modulation, spreading, power limiting on a carrier, canceling power limiting, and the like. For example, the BU is a building baseband unit (Building Baseband Unit, BBU), a central unit (Centralized Unit, CU), a distributed unit (Distributed Unit, DU), or the like.

### (3) Radio frequency unit

An RU is a module or an apparatus that has a function of processing intermediate frequency signals, radio frequency signals, or intermediate frequency and radio frequency signals. For example, the RU is a remote radio unit (Remote Radio Unit, RRU) or an active antenna unit (Active Antenna Unit, AAU).

### (4) Distributed base station (Distributed Base Station, DBS)

A distributed base station refers to a base station in which a baseband unit and a radio frequency unit are deployed separately. The core concept of the distributed base station is to divide a conventional macro base station into two functional modules according to functions. Functions such as a baseband, main control, transmission, and clock of the base station are integrated into a module of a baseband unit (generally referred to as a BBU). The baseband unit is small in size and can be installed at locations flexibly. Intermediate and radio frequency functions such as a transceiver and a power amplifier are integrated into another radio frequency unit (generally referred to as an RRU), and the radio frequency unit is installed on an antenna end. The radio frequency unit and the baseband unit are connected through optical fibers to form a distributed base station.

### (5) CU and DU

In a 5G network, a BBU is evolved into two entities: a CU and a DU. The CU is mainly configured to undertake a non-real-time function, for example, higher layer protocol stack processing, for example, packet data convergence protocol (Packet Data Convergence Protocol, PDCP) layer processing and radio resource control (Radio Resource Control, RRC) layer processing. Optionally, the CU is further configured to undertake some functions of a core network and an edge application service. The DU is mainly configured to undertake a real-time function in the BBU, for example, media access control (Media Access Control, MAC) layer and radio link control protocol (Radio Link Control, RLC) layer functional modules.

### (6) AAU

In a 5G network, an RRU and a passive antenna are integrated to form an AAU. The AAU is configured to implement a function of the RRU and a function of the antenna. Optionally, the AAU is further configured to implement functions of some physical layers in the BBU.

### (7) Common public radio interface (Common Public Radio Interface, CPRI)

The CPRI is an interface standard between a BBU and an RRU, and is used to replace the conventional coaxial cable connection. The CPRI protocol provides specifications for communication interfaces between radio equipment control (Radio Equipment Control, REC) and radio equipment (Radio Equipment, RE) in a cellular wireless network. A typical example of REC is a BBU, and a typical example of RE is an RRU. The CPRI is an interface standard based on direct cable connection, uses TDM to implement data multiplexing, requires exclusive transmission bandwidth, and defines three types of data streams: user, control and management, and synchronization. User-plane data streams are used to transmit quantized IQ modulation (where I is in-phase (in-phase), and q is quadrature (quadrature)) signals of RRU antennas.

### (8) Enhanced common public radio interface (enhanced CPRI, eCPRI)

The eCPRI is an interface standard evolved from the CPRI. The eCPRI protocol defines specifications for connecting eCPRI REC (eREC) and eCPRI RE (eRE) through a fronthaul network (fronthaul network). A typical example of eREC is a BBU, and a typical example of eRE is an AAU or an RRU. Different from the CPRI, the eCPRI is a packet-based interface standard, does not specify a network implementation form, and may be implemented based on any network, such as an Ethernet, an internet protocol (Internet Protocol, IP), a transmission control protocol (Transmission Control Protocol, TCP), a user datagram protocol (User Datagram Protocol, UDP), and an optical transport network (optical transport network, OTN). Based on a BBU-RRU splitting mode defined in the 3rd Generation Partnership Project (3rd Generation Partnership Project, 3GPP), the eCPRI provides several division modes. By dividing some or all physical layer functions into the RRU, data transmitted between the BBU and the RRU is changed from IQ signals on the antenna to modulation symbols (IID), coded bit sequences (ID), and even original data bits (D). Compared with the CPRI, the eCPRI helps reduce the transmission bandwidth between baseband units and radio frequency units, meeting the bandwidth requirements of large-bandwidth multi-antenna services such as massive multiple-in multiple-out (Massive multiple-in multiple out, Massive MIMO).

The eCPRI includes a user plane (User plane, U plane for short, also referred to as a data plane) interface, a synchronization plane (Synchronization plane, S plane for short) interface, and a control and management plane (Control & Management plane, C&M plane or C plane for short) interface. The user plane interface is used to transmit IQ data, that is, sampling data obtained through orthogonal frequency division multiplexing (Orthogonal Frequency Division Multiplexing, OFDM) modulation. The synchronization plane is used by the BBU to transmit clock synchronization signals to the RRU. The control and management plane interface is used to transmit operation administration and maintenance (Operation Administration and Maintenance, OAM) operation, maintenance, and management data of the BBU to the RRU.

### (9) Fronthaul interface and fronthaul network

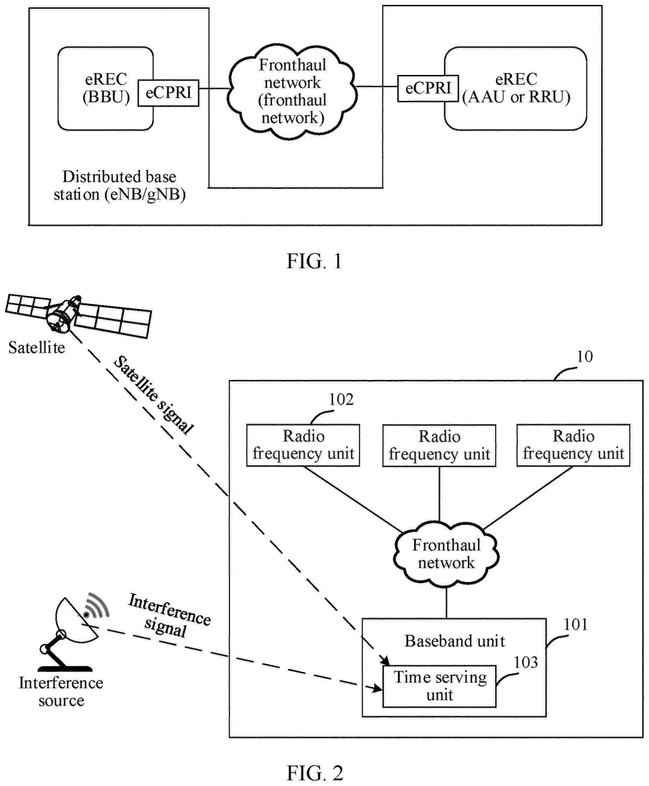

A fronthaul interface refers to a communication interface between a baseband unit and a radio frequency unit. The fronthaul interface includes but is not limited to the CPRI or the eCPRI. Certainly, the fronthaul interface may also be another interface evolved from the CPRI or the eCPRI. A fronthaul network is a connection switching network between a baseband unit and a radio frequency unit. FIG. 1 is a schematic diagram of a fronthaul network in a distributed base station defined in the eCPRI protocol. As shown in FIG. 1, the fronthaul network is a network between an eREC (namely, a baseband unit such as a BBU) and an eRE (namely, a radio frequency unit such as an AAU or an RRU).

### (10) Time serving unit

A time serving unit is a module or an apparatus configured to provide time information based on a received signal. The time serving unit includes but is not limited to a satellite time serving unit, a network time serving unit based on a network time protocol (Network Time Protocol, NTP), a terrestrial radio wave time serving unit, a television network time serving unit, and the like. The satellite time serving unit is also referred to as a satellite clock source, and is a unit that receives a satellite signal and determines time information based on the satellite signal, for example, a GNSS receiver. An NTP-based network time serving unit is a unit that determines time information by exchanging packets with an NTP server through a network. For example, an NTP-based network time serving unit can be a 1588v2 clock processing unit or an NTP client.

### (11) Satellite navigation system (Global Navigation Satellite System, GNSS)

The GNSS is a satellite system that uses space positioning and allows a receiver to determine its location and time based on satellite signals. The GNSS includes four global satellite systems including the global positioning system (Global Positioning System, GPS, formed by 24 satellites) of the United States, the GLONASS system (Global Positioning System, GLONASS) of Russia, the BeiDou navigation satellite system (Bei Dou satellite navigation System, BDS) of China, and the Galileo positioning system (Galileo satellite navigation system, Galileo) of the European Union. In addition, the GNSS further includes regional systems and enhanced systems. The regional systems are, for example, the Quasi-Zenith satellite system (Quasi-Zenith Satellite System, QZSS) of Japan and the Indian regional navigation satellite system (Indian Regional Navigation Satellite System, IRNSS) of India. The enhanced systems are, for example, the wide area augmentation system (Wide Area Augmentation System, WAAS) of the United States.

A system architecture of the GNSS is mainly divided into three parts: a space part, a ground part, and a user part. The space part mainly includes a plurality of satellites. The ground part mainly includes a control station and a monitoring station. The user part mainly includes a GNSS receiver.

### (12) GNSS receiver

The GNSS receiver is also referred to as a GNSS time serving receiver. The function of the GNSS receiver is to receive signals from the GNSS satellite and uses the satellite signals to calculate a location and time. A hardware structure of the GNSS receiver includes an antenna, a processor, a memory, an input/output (input/output, IO) interface, a frequency converter, a signal channel, and the like. The GNSS receiver is used for navigation, positioning, time serving, and geodetic purposes. Two typical applications of the GNSS receiver in a base station are time serving and positioning.

A basic principle of using a GNSS receiver by a base station to perform time serving is as follows: A GNSS receiver is disposed in the base station. The GNSS receiver receives a radio frequency signal from a GNSS antenna, performs signal processing such as frequency conversion and demodulation, and provides time serving information for the base station, so that the base station performs clock synchronization by using the time serving information provided by the GNSS receiver.

### (13) Clock synchronization (Clock synchronization)

Clock synchronization is a concept in computer science and engineering, and aims to coordinate a plurality of independent clocks. In practice, even if time of a plurality of clocks is adjusted to the same, the time is still displayed as different due to clock drift after a period of time. This is because timing rates of different clocks are slightly different. The clock timing rate difference causes many problems. Therefore, a clock source needs to be referred to for calibration to ensure that timing rates and time deviations of different clocks are within a proper range.

### (14) Time division duplex (Time Division Duplex, TDD)

An uplink and a downlink of a (mobile communication) system use a same frequency band, and the uplink and the downlink are transmitted in different slots. In a frequency band, time occupied by the uplink and the downlink may be adjusted as required, and the time occupied by the uplink and the downlink is generally divided into several time periods at a fixed interval, which are referred to as slots. The TDD system requires that the base station support time synchronization.

### (15) Clock holdover mode

The clock holdover mode is a working mode that can be used when a traced clock source is abnormal. The basic principle of the clock holdover mode is as follows: When the clock source is found to be abnormal, last frequency information stored before the clock source is abnormal is used as a timing reference. In this working mode, the clock precision is high, but the mode cannot be maintained for a long time.

Taking the application in the base station as an example, the clock holdover mode is a working mode that the system clock of the base station can use when recognizing that the reference clock is abnormal. In the clock holdover mode, the base station can normally provide services within holdover duration, but the holdover duration depends on a holdover capability of the clock device and a system algorithm capability, for example, 24 hours. After the holdover duration expires, the system clock of the base station cannot meet service requirements, and service interference may occur.

### (16) Pulse per second (Pulse Per Second, PPS)

1 PPS is a pulse signal per second. It indicates a whole second moment. The moment is generally represented by a rising edge of the pulse per second.

### (17) Primary reference clock (Primary Reference Clock, PRC)

PRC is a national reference clock that includes cesium atomic clocks and complies with the G.811 standard.

### (18) Institute of electrical and electronics engineers (Institute of Electrical and Electronics Engineers, IEEE) 1588 protocol

The IEEE 1588 protocol is short for PTP (Precision Timing Protocol). Its full name is precision clock synchronization protocol for network measurement and control systems (IEEE 1588 Precision Clock Synchronization Protocol). A basic working principle of the protocol is that a synchronization data frame is sent between a master node and a slave node, sending time and receiving time information of the data frame are recorded, and the time information is added to the data frame. The slave node obtains the time information, calculates a time deviation between a local clock of the slave node and a master clock and a transmission delay between network nodes, and corrects the local clock to synchronize the local clock with the master clock. IEEE 1588 has two versions: IEEE 1588v1 and IEEE 1588v2. The v1 version is developed for industrial automatic measurement and control systems and is applicable to industrial local area network applications. The v2 version is developed based on the v1 version and is specially designed for communication networks.

### (19) Synchronization Ethernet (synchronization ethernet, SyncE)

SyncE is a technology that recovers a clock by using a code stream on an Ethernet link. SyncE restores a clock at a transmit end from a serial data bit stream through an Ethernet physical layer chip. In this way, the network clock synchronization is implemented.

The following describes a system architecture of a communication system provided in an embodiment of this application by using an example.

FIG. 2 is a schematic diagram of a communication system 10 according to an embodiment of this application.

The communication system 10 is any system that performs communication based on a wireless communication technology, for example, a cellular mobile network system, a wireless local area network (WLAN, wireless local area network) system, or a communication network that integrates a WLAN and a cellular mobile network.

Optionally, the communication system 10 is a 5G network system such as NR, or a system in a next-generation communication technology developed based on 5G, or the communication system 10 is a 4G system such as an LTE system. A network standard of the communication system 10 is not limited in this embodiment.

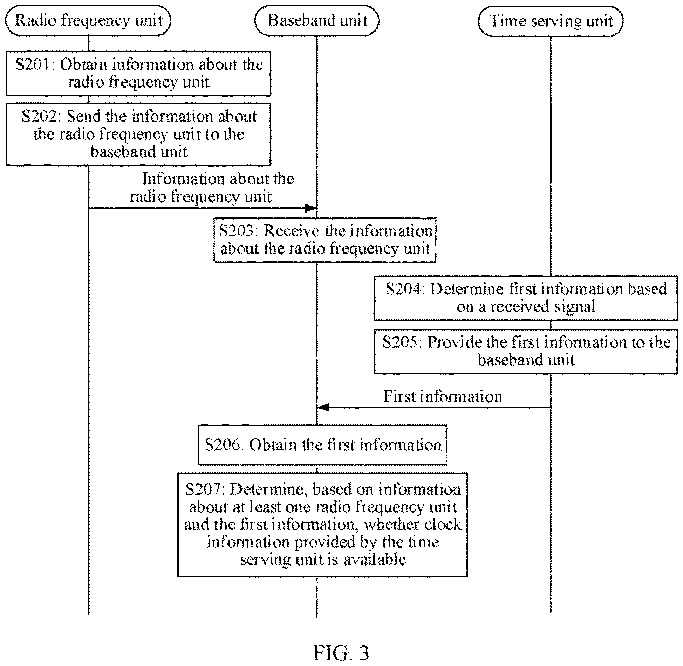

The following describes functions of apparatuses in the communication system shown in FIG. 2 in the method shown in FIG. 3 and connection relationships between different apparatuses. For more details of the apparatuses in the communication system, refer to descriptions related to the base station, the baseband unit, the radio frequency unit, and the time serving unit in the foregoing term concept explanation.

As shown in FIG. 2, the communication system 10 includes a baseband unit 101, at least one radio frequency unit 102, and a time serving unit 103.

The baseband unit 101 is configured to control the communication system to perform clock synchronization. For example, the baseband unit 101 uses the time serving unit 103 as a reference source for clock synchronization of the communication system 10. The baseband unit 101 distributes clock information provided by the time serving unit 103 to each radio frequency unit 102, and each radio frequency unit 102 corrects a local clock based on the clock information sent by the baseband unit 101, thereby implementing clock synchronization of the entire system.

The time serving unit 103 is configured to determine clock information based on a received signal, and provide the clock information to the baseband unit 101. There are many specific implementations of the time serving unit 103. The following uses an example with reference to implementation 1 to implementation 3 for description.

Implementation 1: The time serving unit 103 and the baseband unit 101 are implemented in an integrated manner. In other words, the time serving unit 103 and the baseband unit 101 are integrated into a hardware apparatus. For example, the time serving unit 103 is disposed in the baseband unit 101, and the time serving unit 103 is a functional unit of the baseband unit 101.

Implementation 2: The time serving unit 103 and the baseband unit 101 are disposed separately. For example, the time serving unit 103 and the baseband unit 101 are connected through a feeder, an optical fiber, or a network, and the time serving unit 103 communicates with the baseband unit through an interface.

Implementation 3: Some components of the time serving unit 103 are integrated with the baseband unit 101, and the other components are disposed separately from the baseband unit 101. For example, the time serving unit 103 includes an antenna and a processor. The antenna of the time serving unit 103 is disposed outside the baseband unit 101, and the processor of the time serving unit 103 is disposed in the baseband unit 101. For example, the processor of the time serving unit 103 is integrated into the processor of the baseband unit 101.

The radio frequency unit 102 serves as a data source for determining whether the time serving unit 103 is trusted. Specifically, the radio frequency unit 102 is configured to provide information to the baseband unit 101, so that the baseband unit 101 determines, based on the information provided by the radio frequency unit 102, whether the clock information provided by the time serving unit 103 is available.

The baseband unit 101 and the at least one radio frequency unit 102 are connected through a fronthaul network. The fronthaul network generally refers to a network between the baseband unit 101 and the radio frequency unit 102.

The baseband unit 101 is connected to at least one radio frequency unit 102. A manner of connection between the baseband unit 101 and the at least one radio frequency unit 102 includes a plurality of implementations, for example, the baseband unit 101 and the at least one radio frequency unit 102 are connected through a wired network. Optionally, the baseband unit 101 is connected to the at least one radio frequency unit 102 through an optical fiber. Alternatively, the baseband unit 101 and the at least one radio frequency unit 102 are connected through a passive optical network (Passive Optical Network, PON). Alternatively, the baseband unit 101 is connected to the at least one radio frequency unit 102 through a feeder.

Optionally, the baseband unit 101 is directly connected to the at least one radio frequency unit 102 physically. Alternatively, the baseband unit 101 and the at least one radio frequency unit 102 are connected through one or more forwarding devices (for example, a switch or a router).

It is optional that the time serving unit described in FIG. 2 is deployed in the baseband unit. In this case, the baseband unit optionally uses the local time serving unit as a reference source for system clock synchronization. In some other embodiments, the time serving unit is deployed in the radio frequency unit. In this case, the baseband unit optionally uses the time serving unit in the radio frequency unit as a reference source for system clock synchronization. In addition, when the time serving unit is deployed in the radio frequency unit, the time serving unit and the radio frequency unit are optionally disposed separately or integrated together. This is not limited in this embodiment.

The following describes a method process provided in an embodiment of this application by using an example.

FIG. 3 is a flowchart of a method for checking clock information according to an embodiment of this application. Interaction bodies of the method shown in FIG. 3 include a baseband unit, a radio frequency unit, and a time serving unit. The method shown in FIG. 3 includes the following step S201 to step S207.

A network deployment scenario on which the method shown in FIG. 3 is based is optionally shown in FIG. 2. For example, with reference to FIG. 2, the baseband unit in the method shown in FIG. 3 is the baseband unit 101 in FIG. 2, and the radio frequency unit in the method shown in FIG. 3 is the radio frequency unit 102 in FIG. 2. The time serving unit in the method shown in FIG. 3 is the time serving unit 103 in FIG. 2.

The method shown in FIG. 3 relates to information provided by the radio frequency unit to the baseband unit and information provided by the time serving unit to the baseband unit. To distinguish information from different sources, "first information" is used to describe the information provided by the time serving unit.

In the method shown in FIG. 3, the process is described by using an example in which the baseband unit and the time serving unit are separately deployed. The time serving unit performs S204 and S205, and the baseband unit performs S206 and S207. When the baseband unit and the time serving unit are integrated, S204 and S205 and S206 and S207 are all performed by an apparatus integrated by the baseband unit and the time serving unit. For example, when the time serving unit is integrated into the baseband unit, the following S204 and S205 and S206 and S207 are all performed inside the baseband unit.

The method shown in FIG. 3 is described by using an example in which S201 to S203 are first performed, and then S204 to S206 are performed. In some other embodiments, S204 to S206 are first performed, and then S201 to S203 are performed. In some other embodiments, S201 to S203 and S204 to S206 are concurrently performed. A sequence of S201 to S203 and S204 to S206 is not limited in this embodiment.

The method shown in FIG. 3 is described by using an example in which the baseband unit performs S206 and S207. In some other embodiments, the radio frequency unit performs S206 and S207. For example, when the time serving unit is deployed in the radio frequency unit, the time serving unit provides the first information for the radio frequency unit. After the radio frequency unit receives the first information sent by the time serving unit, optionally, the radio frequency unit sends the first information and information of the radio frequency unit to the baseband unit, and the baseband unit determines, based on the two types of information provided by the radio frequency unit, whether the clock information of the time serving unit is available. Alternatively, the radio frequency unit determines, based on the first information and information about the radio frequency unit, whether the clock information provided by the time serving unit is available, and sends a determining result to the baseband unit.

Optionally, the method shown in FIG. 3 is applied to a base station. For example, a baseband unit of a base station determines, by using information provided by a radio frequency unit of the local site, whether a local time serving unit is available. In this scenario, the baseband unit, the radio frequency unit, and the time serving unit in the method shown in FIG. 3 are components of the same base station in the communication system. Alternatively, FIG. 3 is performed by different base stations through interaction. For example, a baseband unit of a base station determines, by using information provided by a radio frequency unit of a neighboring site or a remote site, whether a local time serving unit is available. In this scenario, the baseband unit and the radio frequency unit in the method shown in FIG. 3 are components of different base stations. For example, the communication system includes a first base station and a second base station, the baseband unit and the time serving unit are components included in the first base station, and the radio frequency unit is a component included in the second base station.

S201: The radio frequency unit obtains information about the radio frequency unit.

The information obtained by the radio frequency unit includes but is not limited to geographical location information of the radio frequency unit and/or clock information of the radio frequency unit. The following uses an example to describe a type of the information obtained by the radio frequency unit and a specific implementation of obtaining the information. For details, refer to (A) and (B) below.

### (A) Geographical location information of the radio frequency unit

From a perspective of an information function, the geographical location information of the radio frequency unit indicates a geographical location of the radio frequency unit.

From a perspective of an information form, optionally, the geographical location information of the radio frequency unit includes a longitude of a location of the radio frequency unit and a latitude of the location of the radio frequency unit, where the longitude and the latitude indicate a location of the radio frequency unit in an earth coordinate system. Optionally, the geographical location information of the radio frequency unit further includes an altitude of the radio frequency unit.

Alternatively, the geographical location information of the radio frequency unit is other information that can represent the geographical location of the radio frequency unit in addition to the longitude and the latitude. For example, the geographical location information of the radio frequency unit is three-dimensional point coordinates of the radio frequency unit, for example, three-dimensional point coordinates of the radio frequency unit in various three-dimensional coordinate systems such as a geographic coordinate system, a navigation coordinate system, a carrier coordinate system, and an earth coordinate system. For another example, the three-dimensional space is divided into many spatial rasters, and the geographical location information of the radio frequency unit is an identifier of a spatial raster in which the radio frequency unit is located.

The radio frequency unit obtains the geographical location information in a plurality of implementations. The following describes, with reference to implementation 1 to implementation 5, an implementation that may be used when the radio frequency unit obtains the geographical location information by using an example.

Implementation 1: The radio frequency unit pre-stores the geographical location information in a site construction phase, and optionally, the geographical location information is obtained through survey by a network management person by using a surveying and mapping instrument during site survey.

Implementation 2: The radio frequency unit includes a positioning element, and the radio frequency unit obtains the geographical location information of the radio frequency unit through the positioning element. The positioning element is configured to determine a geographical location of the positioning element. The positioning element in the radio frequency unit is, for example, a GNSS receiver, or various wireless positioning elements, such as an infrared sensor, an ultrasonic sensor, and a Bluetooth module.

Implementation 3: The network management device obtains the geographical location information of the radio frequency unit, and the network management device sends the geographical location information of the radio frequency unit to the radio frequency unit. The radio frequency unit receives the geographical location information of the radio frequency unit sent by the network management device.

Implementation 4: The radio frequency unit obtains the geographical location information of the radio frequency unit through measurement. For example, one or more specified network elements whose locations are known send a positioning reference signal to the radio frequency unit. After the radio frequency unit receives the positioning reference signal, the radio frequency unit determines a distance between the radio frequency unit and the specified network element based on a transmission delay of the positioning reference signal, and then determines the geographical location of the radio frequency unit based on the distance and a location of the specified network element.

Implementation 5: The radio frequency unit invokes a communication interface provided by a positioning server, to request the positioning server to determine the geographical location of the radio frequency unit. The positioning server obtains the geographical location information of the radio frequency unit in response to the request of the radio frequency unit, and sends the geographical location information to the radio frequency unit.

### (B) Clock information of the radio frequency unit

The clock information of the radio frequency unit includes but is not limited to at least one of time information, frequency information, or phase information. The clock information of the radio frequency unit has many forms. The following describes a form of the clock information of the radio frequency unit by using examples with reference to (B-1) to (B-3).

(B-1) The clock information of the radio frequency unit is a periodic pulse signal.

Optionally, the clock information of the radio frequency unit is a rectangular square wave signal, for example, a 1 PPS signal. A location of a rising edge or a falling edge in the pulse signal represents a time point. A quantity of pulses in a time periodicity of the pulse signal indicates a frequency.

(B-2) The clock information of the radio frequency unit includes a specific value of time, frequency, or phase.

For example, time information of the radio frequency unit is a specific value of year, month, day, hour, minute, and second, for example, 18:20: 10 on December 20, 2021. Optionally, a unit of the time information of the radio frequency unit is second. For another example, the frequency information of the radio frequency unit is a specific value of the frequency. A unit of frequency information of the radio frequency unit is, for example, megahertz, kilohertz, or gighertz.

(B-3) The time information of the radio frequency unit is an identifier of time in a radio frame, for example, a frame number or a subframe number.

S202: The radio frequency unit sends the information about the radio frequency unit to the baseband unit in the communication system.

In an example embodiment, the radio frequency unit invokes the fronthaul interface, and sends the information about the radio frequency unit to the baseband unit through the fronthaul interface.

The type of the fronthaul interface used for transmitting the information about the radio frequency unit described above between the radio frequency unit and the baseband unit includes a plurality of implementations. The following describes, with reference to implementations a to d, the type of the fronthaul interface that may be used for transmitting the information about the radio frequency unit between the radio frequency unit and the baseband unit by using examples.

Implementation a: The radio frequency unit sends the geographical location information, the clock information, and/or other information of the radio frequency unit to the baseband unit through a fronthaul interface of a synchronization plane. The baseband unit receives the geographical location information, the clock information, and/or other information of the radio frequency unit through the fronthaul interface of the synchronization plane.

Implementation b: The radio frequency unit sends the geographical location information, the clock information, and/or other information of the radio frequency unit to the baseband unit through a fronthaul interface of a management plane. The baseband unit receives the geographical location information, the clock information, and/or other information of the radio frequency unit through the fronthaul interface of the management plane.

Implementation c: The radio frequency unit sends the geographical location information, the clock information, and/or other information of the radio frequency unit to the baseband unit through a fronthaul interface of a control plane. The baseband unit receives the geographical location information, the clock information, and/or other information of the radio frequency unit through the fronthaul interface of the control plane.

Implementation d: The radio frequency unit sends the geographical location information, the clock information, and/or other information of the radio frequency unit to the baseband unit through a fronthaul interface of a user plane. The baseband unit receives the geographical location information, the clock information, and/or other information of the radio frequency unit through the fronthaul interface of the user plane.

For a specific implementation in which the radio frequency unit sends the information through the fronthaul interface, the following describes technical details by using an example in which the fronthaul interface is an eCPRI.

In a possible implementation, the radio frequency unit generates an eCPRI message based on the information about the radio frequency unit, and sends the eCPRI message to the baseband unit. The eCPRI message includes the information about the radio frequency unit.

For a location at which the information about the radio frequency unit is carried in the eCPRI message, in a possible implementation, a new type of type-length-value (Type Length Value, TLV) is extended in the eCPRI message to carry the information about the radio frequency unit. The TLV includes a type field, a length field, and a value field. The type field carries type information of the TLV, and the type information indicates that the TLV carries the information about the radio frequency unit. The length field carries length information of the TLV, and the length information indicates a byte length of the information about the radio frequency unit in the TLV The value field carries the information about the radio frequency unit.

With reference to manner 1 to manner 4, the following uses an example to describe a type of a protocol packet carrying the geographical location information, the clock information, and/or other information of the radio frequency unit.

Manner 1: A 1588 protocol packet (for example, an IEEE 1588v2 packet) carries the eCPRI message that includes the geographical location information, the clock information, and/or other information of the radio frequency unit.

For example, the radio frequency unit generates and sends a 1588v2 packet to the baseband unit, where a payload field of the 1588v2 packet includes the geographical location information, the clock information, and/or other information.

Manner 2: A SyncE protocol packet, a simple network management protocol (Simple Network Management Protocol, SNMP) packet, a hypertext transfer protocol (Hyper Text Transfer Protocol, HTTP) packet, or a hyper text transfer protocol over secure socket layer (Hyper Text Transfer Protocol over SecureSocket Layer, HTTPS) packet carries the eCPRI message that includes the geographical location information, the clock information, and/or other information of the radio frequency unit.

Manner 3: A protocolpacket dedicated to carrying an eCPRI message is used to carry the eCPRI message including the information about the radio frequency unit.

Manner 4: A TCP/IP protocol stack is skipped, and a MAC Ethernet frame is used to carry the eCPRI message that includes the information about the radio frequency unit.

It is optional that the radio frequency unit described above uses the eCPRI fronthaul interface to send information. In some other embodiments, the radio frequency unit uses a fronthaul interface other than the eCPRI to send information, for example, a CPRI, or an interface evolved from the eCPRI, or uses another interface between the radio frequency unit and the baseband unit to send information. A specific fronthaul interface used by the radio frequency unit to send information to the radio frequency unit is not limited in this embodiment. In addition, for a specific implementation of sending information by using another fronthaul interface other than the eCPRI, refer to the foregoing description of sending information by using the eCPRI.

An occasion for the radio frequency unit to report information to the baseband unit includes a plurality of cases. The following describes the occasion for the radio frequency unit to report information to the baseband unit by using examples with reference to case 1 to case 3.

Case 1: The radio frequency unit periodically sends the geographical location information, the clock information, and/or other information of the radio frequency unit.

For example, the radio frequency unit obtains the geographical location information, the clock information, and/or other information of the radio frequency unit each time periodicity, and sends the obtained information to the baseband unit. A length of the time periodicity is set according to a requirement, for example, a transmission time interval (Transmission Time Interval, TTI).

Case 2: When receiving signaling of the baseband unit, the radio frequency unit sends the geographical location information, the clock information, and/or other information of the radio frequency unit.

For example, when the baseband unit needs to determine whether the clock information is available, the baseband unit generates and sends a piece of signaling to the radio frequency unit, where the signaling indicates the radio frequency unit to report the geographical location information, the clock information, and/or other information of the radio frequency unit. When the radio frequency unit receives the signaling of the baseband unit, the radio frequency unit obtains the geographical location information, the clock information, and/or other information of the radio frequency unit, and sends the obtained information to the baseband unit.

Case 3: The radio frequency unit sends the geographical location information, the clock information, and/or other information of the radio frequency unit when transmitting service data.

For example, when sending the service data to the baseband unit, the radio frequency unit encapsulates the geographical location information, the clock information, and/or other information of the radio frequency unit and the service data into the same packet, and sends the packet including the service data and the information about the radio frequency unit to the baseband unit.

S203: The baseband unit receives the information about the radio frequency unit from the radio frequency unit.

The foregoing S201 to S203 describe the interaction process between the baseband unit and the radio frequency unit. In a scenario where a plurality of radio frequency units exist, optionally, the baseband unit and each radio frequency unit in the plurality of radio frequency units execute a process similar to S201 to S203, so that the baseband unit obtains information about the plurality of radio frequency units.

The foregoing S201 to S203 describe interaction between the baseband unit and the radio frequency unit, to obtain the information about the radio frequency unit. Alternatively, the baseband unit obtains the information about the radio frequency unit from another apparatus or network element other than the radio frequency unit. The following uses an example with reference to manner 1 to manner 3.

Manner 1: A network management device obtains the geographical location information, the clock information, and/or other information of the radio frequency unit, and sends the information about the radio frequency unit to the baseband unit. The baseband unit receives the information about the radio frequency unit from the network management device.

Manner 2: A control plane device or a core network obtains the geographical location information, the clock information, and/or other information of the radio frequency unit, and sends the information about the radio frequency unit to the baseband unit. The baseband unit receives the information about the radio frequency unit from the control plane device or the core network.

Manner 3: A network administrator configures the geographical location information, the clock information, and/or other information of the radio frequency unit into the baseband unit by using a command line, a web interface, or the like.

S204: The time serving unit determines first information based on the received signal.

The signal received by the time serving unit includes a radio signal transmitted by a satellite and/or a radio signal transmitted by an interference source. For example, the time serving unit is a GPS receiver. In a case in which no interference exists, a signal received by the GPS receiver is a radio signal transmitted by a GPS satellite. In a case in which interference exists, a signal received by the GPS receiver includes a radio signal transmitted by a GPS satellite and a radio signal transmitted by an interference source. When interference is severe or channel quality is poor, the GPS receiver may receive radio signals from the interference source instead of from the GPS satellite. For example, FIG. 2 shows a scenario in which both a satellite and an interference source exist. When the satellite transmits a radio signal, the interference source also transmits a radio signal. Therefore, the time serving unit not only receives the radio signal transmitted by the satellite, but also receives the radio signal transmitted by the interference source. The first information is any information that can be determined based on the signal received by the time serving unit.

Optionally, the first information is geographical location information that is of the time serving unit and that is determined by the time serving unit based on the signal received by the time serving unit. The following describes the geographical location information determined by the time serving unit.

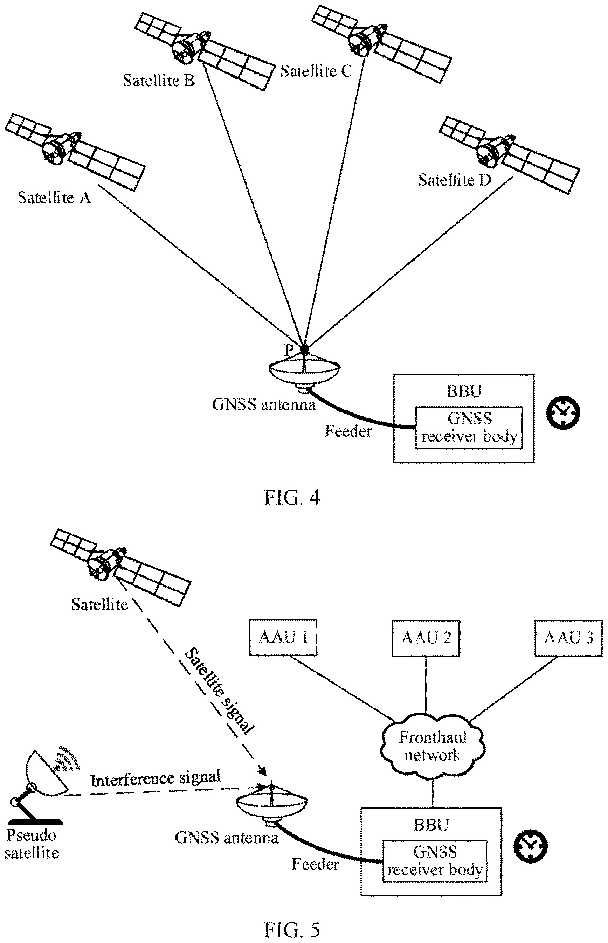

From a perspective of an information function, the geographical location information determined by the time serving unit indicates a geographical location of the time serving unit. In other words, the geographical location information determined by the time serving unit is the geographical location information of the time serving unit. For example, the geographical location information determined by the time serving unit indicates a geographical location of an antenna of the time serving unit. For example, refer to FIG. 4, a GNSS receiver in FIG. 4 is an example of a time serving unit, a point P in FIG. 4 is an example of a location of an antenna of the GNSS receiver, and geographical location information determined by the time serving unit indicates, for example, a location of the point P.

From a perspective of an information form, optionally, the geographical location information determined by the time serving unit includes a longitude of the location of the time serving unit and a latitude of the location of the time serving unit, and the longitude and the latitude indicate a location of the time serving unit in the earth coordinate system. Optionally, the geographical location information determined by the time serving unit further includes an altitude of the time serving unit.

Alternatively, the geographical location information determined by the time serving unit is other information that can represent the geographical location of the time serving unit in addition to the longitude and the latitude. For example, the geographical location information determined by the time serving unit is three-dimensional point coordinates of the time serving unit, for example, three-dimensional point coordinates of the time serving unit in various three-dimensional coordinate systems such as a geographic coordinate system, a navigation coordinate system, a carrier coordinate system, and an earth coordinate system.

Optionally, the first information is clock information determined by the time serving unit based on the signal received by the time serving unit. The clock information determined by the time serving unit includes but is not limited to at least one of time information, frequency information, or phase information. From a perspective of an information form, optionally, the clock information determined by the time serving unit is a periodic pulse signal (for example, the 1 PPS). For another example, the clock information determined by the time serving unit includes a specific value of time, frequency, or phase.

The geographical location information and the clock information described above have an AND/OR logical relationship. Optionally, the time serving unit determines both the geographical location information and the clock information based on the received signal, and provides both the determined geographical location information and the determined clock information to the baseband unit. For example, the time serving unit includes a plurality of IO interfaces, and when one IO interface outputs a pulse signal including clock information, another IO interface outputs geographical location information. For another example, the time serving unit determines and provides one of the geographical location information and the clock information.

S205: The time serving unit provides the first information to the baseband unit.

S206: The baseband unit obtains the first information through the time serving unit.

The time serving unit provides the first information to the baseband unit in a plurality of implementations. The following uses some possible implementations in which the time serving unit provides the first information to the baseband unit with reference to manner A to manner C as examples for description.

Manner A: The time serving unit includes an IO interface, and the time serving unit outputs the first information through the IO interface. The baseband unit receives the first information output by the time serving unit from the IO interface.

Manner B: The time serving unit includes a network interface, and the time serving unit encapsulates the first information into a packet, where a destination address of the packet is an address of the baseband unit. The time serving unit sends the packet carrying the first information to the baseband unit through the network interface of the time serving unit. The baseband unit receives, through the network interface of the baseband unit, the packet carrying the first information.

Manner C: The time serving unit stores the first information into a specified memory built in the time serving unit, and provides a storage address of the first information to the baseband unit. The baseband unit accesses the specified memory on the time serving unit based on the storage address of the first information, to obtain the first information.

The foregoing described case in which the time serving unit determines and outputs the first information is an optional manner. In some other embodiments, after the time serving unit outputs the information, the baseband unit determines the first information based on the information output by the time serving unit.

The information output by the time serving unit is information output by the time serving unit through the IO interface, the network interface, or the like. For example, the information output by the time serving unit and the information provided by the radio frequency unit may have different attributes, dimensions, or formats. The baseband unit first converts the information output by the time serving unit to obtain the first information, and then performs subsequent steps based on the first information obtained through calculation. For example, the information output by the time serving unit is clock information, and the information provided by the radio frequency unit is geographical location information. After the baseband unit receives the clock information output by the time serving unit, the baseband unit calculates the geographical location information of the time serving unit based on the clock information output by the time serving unit, and then determines whether the clock information provided by the time serving unit is available based on the geographical location information obtained through calculation and the geographical location information provided by the radio frequency unit.

S207: The baseband unit determines, based on the information about the at least one radio frequency unit and the first information, whether the clock information provided by the time serving unit is available.

For example, the baseband unit uses the information provided by the radio frequency unit as reference information, and the baseband unit assists, based on the information provided by the radio frequency unit, in determining whether the information provided by the time serving unit is trusted, to determine whether to use the clock information provided by the time serving unit to perform clock synchronization.

In some embodiments, a specific process of determining, by the baseband unit, whether the clock information is available includes: determining, by the baseband unit, whether to use the clock information provided by the time serving unit based on a deviation between the information provided by the time serving unit and the information provided by the radio frequency unit. Specifically, the baseband unit obtains at least one deviation based on the information about the at least one radio frequency unit and the first information provided by the time serving unit; and the baseband unit determines, based on the at least one deviation and a threshold, whether the clock information provided by the time serving unit is available.

The deviation is a deviation between the first information provided by the time serving unit to the baseband unit and the information provided by the radio frequency unit to the baseband unit. The threshold is a parameter used to determine whether the deviation is within a proper range. Optionally, the threshold is pre-stored in the baseband unit. With reference to case 1 and case 2, the following describes specific forms of the deviation determined by the baseband unit and the threshold used by the baseband unit by using examples.

Case 1: The information provided by the radio frequency unit to the baseband unit is the geographical location information of the radio frequency unit, and the first information provided by the time serving unit to the baseband unit is the geographical location information obtained by the time serving unit based on the received signal. The deviation refers to a deviation between the geographical location of the time serving unit and the geographical location of the radio frequency unit, namely, a spatial distance between the radio frequency unit and the time serving unit. The foregoing threshold is a spatial distance threshold. Optionally, the threshold is a sum of a distance between the radio frequency unit and the baseband unit and a maximum error allowed to occur in the time serving unit. For example, if the radio frequency unit is deployed at a location 1000 meters away from the baseband unit, and the maximum error of 100 meters is allowed when the time serving unit outputs the location, the threshold is 1100 meters.

Case 2: The information provided by the radio frequency unit to the baseband unit is the clock information of the radio frequency unit, and the first information provided by the time serving unit to the baseband unit is the clock information obtained by the time serving unit based on the received signal. The deviation is a deviation of the clock of the time serving unit relative to the clock of the radio frequency unit, and the deviation includes at least one of a time difference, a frequency deviation, or a phase deviation. The threshold includes at least one of a spatial distance threshold, a time difference threshold, a frequency deviation threshold, or a phase deviation threshold. The time difference is a difference between time of the time serving unit and time of the radio frequency unit. The frequency deviation is a difference between a frequency of the time serving unit and a frequency of the radio frequency unit. The phase deviation is a difference between a phase of the time serving unit and a phase of the radio frequency unit.

The following describes a principle of determining based on the geographical location information.

The location of the radio frequency unit is equivalent to a known reference location. If the location determined by the time serving unit is inaccurate due to interference to the time serving unit, a deviation between the location determined by the time serving unit and the known reference location increases. Therefore, whether the time serving unit is trusted can be accurately determined by determining whether the deviation between the location determined by the time serving unit and the location of the radio frequency unit is greater than the threshold.

When a plurality of radio frequency units are deployed, optionally, the baseband unit obtains a deviation between information provided by each radio frequency unit in the plurality of radio frequency units and the first information, to obtain a plurality of deviations. The baseband unit determines, based on the plurality of deviations, whether the time serving unit is available. Specifically, how the baseband unit performs determining by using the plurality of deviations includes a plurality of manners. With reference to manner 1 to manner 4, the following describes how the baseband unit specifically determines whether the time serving unit is available through the plurality of deviations by using examples.

Manner 1: The baseband unit determines whether each of the plurality of deviations is greater than a threshold. If each deviation is greater than the threshold, the baseband unit determines that the clock information provided by the time serving unit is unavailable. If one of the deviations is less than or equal to the threshold, the baseband unit determines that the clock information provided by the time serving unit is available. In other words, if the information provided by all the radio frequency units indicates that the information provided by the time serving unit is improper, it is determined that the clock information provided by the time serving unit is unavailable.

Manner 2: The baseband unit determines whether each of the plurality of deviations is greater than the threshold. If one of the plurality of deviations is greater than the threshold, the baseband unit determines that the clock information provided by the time serving unit is unavailable. If each deviation is less than or equal to the threshold, the baseband unit determines that the clock information provided by the time serving unit is available. In other words, if information provided by one radio frequency unit indicates that the information provided by the time serving unit is improper, it is determined that the clock information provided by the time serving unit is unavailable.

Manner 3: The baseband unit determines whether each of the plurality of deviations is greater than the threshold. The baseband unit determines a proportion of deviations greater than a threshold in the plurality of deviations. If the deviations greater than the threshold reach a set proportion, the baseband unit determines that the clock information provided by the time serving unit is unavailable.

Manner 4: The baseband unit determines whether each of the plurality of deviations is greater than the threshold. The baseband unit determines a quantity of deviations greater than the threshold. If the deviations greater than the threshold reach a set quantity, the baseband unit determines that the clock information provided by the time serving unit is unavailable.

In some embodiments, after the baseband unit determines whether the clock information provided by the time serving unit is available, the baseband unit performs different processing actions based on different determining results. With reference to manner a to manner c, the following uses examples to describe processing actions that may be performed by the baseband unit after determining whether the clock information provided by the time serving unit is available.

Manner a: If the baseband unit determines that clock information provided by a time serving unit is available, the baseband unit performs clock synchronization by using the clock information provided by the time serving unit. If the baseband unit determines that clock information provided by a time serving unit is unavailable, the baseband unit stops using the time serving unit as a clock reference source, that is, stops performing clock synchronization based on the clock information provided by the time serving unit.

Manner b: There are a plurality of candidate time serving units in the communication system, and each time serving unit provides clock information to the baseband unit. If the baseband unit determines, by using the foregoing method, that clock information provided by one of the time serving units is unavailable, the baseband unit determines other time serving units other than the time serving unit as the clock reference source, and performs clock synchronization by using clock information provided by the other time serving units.

Manner c: If the baseband unit determines that the clock information provided by the time serving unit is unavailable, the baseband unit enters a clock holdover mode. For example, if only one time serving unit exists in the communication system, and the baseband unit determines, by using the foregoing method, that the clock information provided by the time serving unit is unavailable, the baseband unit enters the clock holdover mode. For another example, if a plurality of candidate time serving units exist in the communication system, and the baseband unit determines, by using the foregoing method, that clock information provided by each time serving unit is unavailable, the baseband unit enters the clock holdover mode.

In the method provided in this embodiment, a baseband unit obtains information provided by a radio frequency unit to assist in determining whether clock information provided by a time serving unit is available, thereby avoiding service interference caused by using inaccurate clock information, and helping improve reliability of system clock synchronization.

The following uses an example to describe the embodiment shown in FIG. 3 with reference to an application scenario of a distributed base station and some specific examples.

A distributed base station in the following example is an example of the communication system in the method shown in FIG. 3, and a GNSS receiver in the following example is an example of the time serving unit in the method shown in FIG. 3. A BBU in the following example is an example of the baseband unit in the method shown in FIG. 3. An AAU in the following example is an example of the radio frequency unit in the method shown in FIG. 3. Longitude and latitude information (x1, y1) of the AAU in the following example is an example of the geographical location information of the radio frequency unit in the method shown in FIG. 3. Longitude and latitude information (x2, y2) obtained by the GNSS receiver of the BBU in the following example is an example of the first information in the method shown in FIG. 3. A straight-line distance L in the following example is an example of the deviation in the method shown in FIG. 3.

A GNSS clock synchronization method is widely used in a base station, and is also referred to as base station GNSS time serving. When a distributed base station supports GNSS clock synchronization, a GNSS receiver is generally deployed on a BBU side. FIG. 4 is a schematic diagram of supporting GNSS clock synchronization by a base station according to an embodiment of this application. As shown in FIG. 4, an antenna of the GNSS receiver is disposed outside the BBU, the GNSS receiver body is integrated inside the BBU, and the antenna of the GNSS receiver is connected to the GNSS receiver body through a feeder. The antenna of the GNSS receiver is configured to receive satellite signals transmitted by four or more satellites, for example, a signal transmitted by a satellite A, a signal transmitted by a satellite B, a signal transmitted by a satellite C, and a signal transmitted by a satellite D shown in FIG. 4. The GNSS receiver outputs clock information and location information to the BBU based on a satellite signal received by the antenna, and the BBU uses the clock information output by the GNSS receiver as a PRTC of the base station.

However, because satellite signals are in open space and are not encrypted, the GNSS receiver is vulnerable to spoofing (Spoofing) of satellite signals that are sent by devices such as pseudo satellites and are inconsistent with the current GNSS satellite system. FIG. 5 is a schematic diagram of interference caused by a pseudo satellite to GNSS clock synchronization of a base station according to an embodiment of this application. As shown in FIG. 5, when receiving a satellite signal of a GNSS satellite system, a GNSS receiver also receives an interference signal sent by a pseudo satellite.

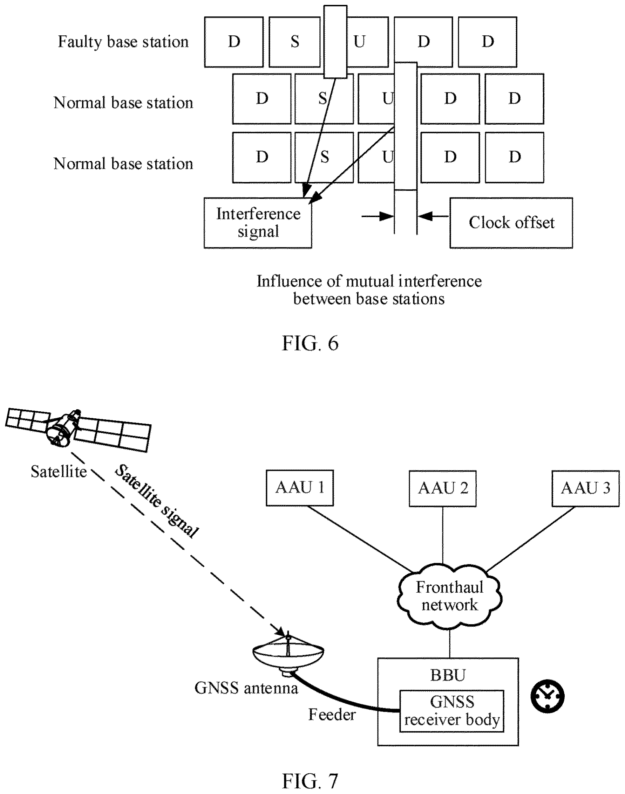

Spoofing interference to the GNSS receiver originates from a navigational positioning principle. Because a delay of an interference signal generated by an interference source such as a pseudo satellite reaching the GNSS receiver is inconsistent with a delay of a real GNSS satellite signal reaching the GNSS receiver in the sky, a distance detected by the GNSS receiver (where the distance is referred to as a "pseudo distance" in satellite navigation) changes, and location information output by the GNSS receiver is inconsistent with real location information. More importantly, once the GNSS receiver of the base station is spoofed, system time of the base station is inconsistent with system time of other surrounding base stations, and a large clock phase offset is introduced between base stations, which is also referred to as clock out-of-synchronization. For TDD wireless networks, clock out-of-synchronization causes service interference. FIG. 6 is a schematic diagram of service interference of a base station according to an embodiment of this application. As shown in FIG. 6, because a faulty base station is affected by an interference signal, a downlink signal of the faulty base station is sent in an uplink slot of a normal base station, and a service of the base station is severely interfered.

It can be seen that the spoofing interference of the satellite has great harm to the base station. The spoofing interference is performed by using a signal similar to a satellite navigation signal in the sky, so that the GNSS receiver obtains false location information and false time information. If the base station can identify that the location information output by the GNSS receiver is false, the base station may switch to another clock reference source other than the GNSS receiver, for example, a network clock reference source, or enter a holdover mode when there is no other available reference source, and then trace the GNSS reference source after interference is eliminated, thereby avoiding impact on a service.

However, if a spoofing signal exists when the base station is deployed or restarted, it is difficult for the base station to identify whether the GNSS receiver is subject to spoofing interference. Consequently, service interference is caused once the base station is deployed. In addition, in a running process of the base station, the base station enters the clock holdover mode because a reference source is lost, or because the GNSS receiver is subject to spoofing interference, or due to another reason. In the clock holdover mode, it is also difficult for the base station to identify whether the GNSS receiver is subject to spoofing interference.

In conclusion, the reason why the base station cannot identify spoofing signals during site deployment, restart, or clock holdover mode is that the base station cannot identify whether the current location obtained by the GNSS receiver is correct. In other words, the GNSS receiver of the base station lacks an accurate reference location, and therefore cannot identify whether a received signal is a spoofing interference signal or a normal signal.

In the following example, in a distributed base station, a GNSS receiver is integrated into a BBU. An AAU reports an accurate location of the AAU to the BBU through a fronthaul network. The BBU determines, by using the accurate location of the AAU, a distance and a change between location information output by the GNSS receiver and the accurate location of the AAU, to determine whether the GNSS is spoofed.

The following describes a system architecture applied in the following example.

The following example is applied to a distributed base station architecture. A GNSS receiver is deployed in the BBU for clock synchronization of the base station. FIG. 7 is a schematic diagram of a system architecture according to an embodiment of this application. As shown in FIG. 7, an AAU 1, an AAU 2, an AAU 3, and a BBU are connected through a fronthaul network.

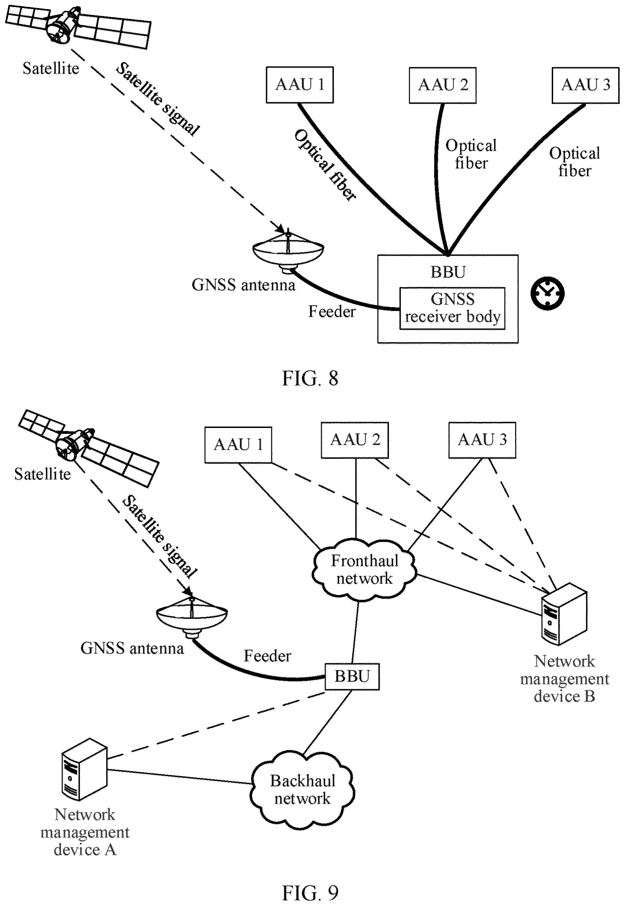

The fronthaul network generally refers to a connection between a BBU and an AAU or an RRU. For example, the BBU is directly connected to the AAU. FIG. 8 is a schematic diagram of a direct connection between a BBU and an AAU through an optical fiber according to an embodiment of this application. As shown in FIG. 8, the BBU is directly connected to an AAU 1 through an optical fiber, the BBU is directly connected to an AAU 2 through an optical fiber, and the BBU is directly connected to an AAU 3 through an optical fiber.

It is also applicable that the BBU and the AAU are connected to different network management devices. FIG. 9 is a schematic diagram of an application scenario according to an embodiment of this application. As shown in FIG. 9, a BBU is connected to a network management device A, and an AAU 1, an AAU 2, and an AAU 3 are connected to a network management device B. In FIG. 9, a solid line represents a physical connection, and a dashed line represents a logical connection.

The following describes details of clock processing in the BBU.

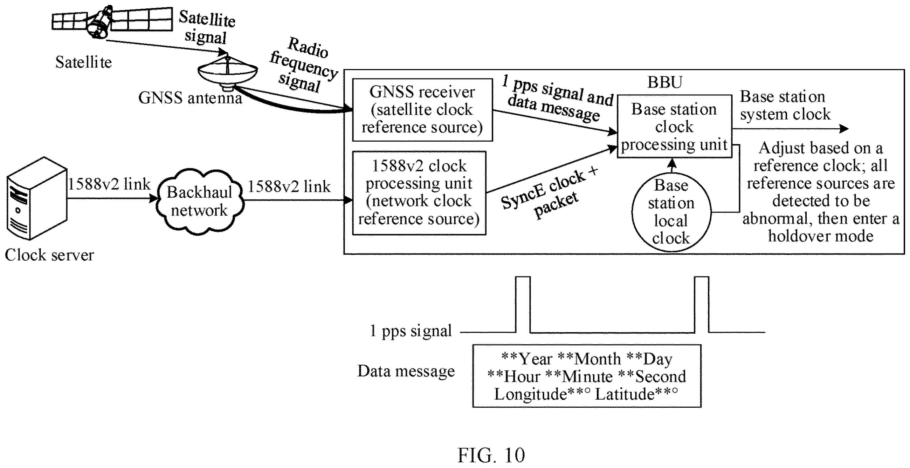

FIG. 10 is a schematic diagram of clock processing performed by a BBU according to an embodiment of this application. As shown in FIG. 10, the BBU includes a GNSS receiver, a 1588v2 clock processing unit, a base station clock processing unit, and a base station local clock.

The GNSS receiver provides a satellite clock reference source. As shown in FIG. 10, the body of the GNSS receiver is integrated inside the BBU, and the body of the GNSS receiver is connected to a GNSS antenna through a feeder. Output data of the GNSS receiver includes 1 pps pulse signals that are used to provide frequency and phase information. In addition, a serial port of the GNSS receiver outputs data messages, where the data messages include information such as the year, month, day, hour, minute, second, and longitude and latitude.

The 1588v2 clock processing unit provides a network clock reference source. As shown in FIG. 10, the 1588v2 clock processing unit is connected to a clock server through a backhaul network. The clock server periodically sends 1588v2 packets to the 1588v2 clock processing unit. After receiving the 1588v2 packets through the backhaul network, the 1588v2 clock processing unit outputs a SyncE clock and packets based on timestamps carried in the 1588v2 packets.

The base station clock processing unit is configured to obtain the satellite clock reference source from the GNSS receiver, obtain the network clock reference source from the 1588v2 clock processing unit, and detect statuses of the two types of clock reference sources. If both the satellite clock reference source and the network clock reference source are available, the clock processing unit selects a specified reference source based on a user configuration. If both the satellite clock reference source and the network clock reference source are unavailable, the clock processing unit enters the holdover mode.

With reference to several specific examples, the following describes how to check clock information provided by a GNSS receiver on a BBU in a distributed base station scenario by using examples. Refer to the following example 1 to example 3.

### Example 1

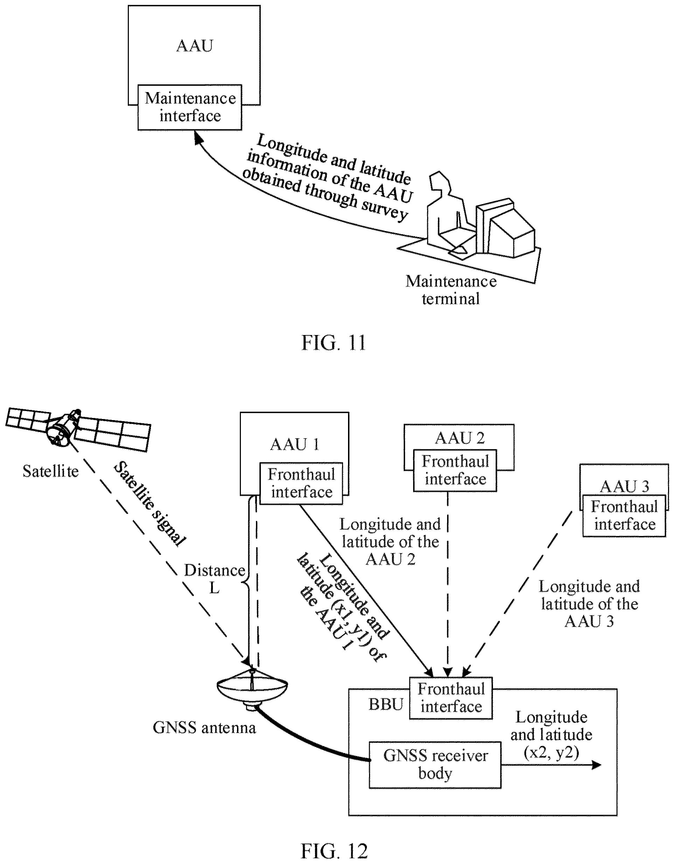

In a distributed base station, a GNSS receiver is deployed in a BBU for clock synchronization. During or before AAU installation and deployment, accurate longitude and latitude information of the AAU is recorded through an AAU local maintenance interface. The longitude and latitude information is obtained through site survey. FIG. 11 is a schematic diagram of writing longitude and latitude information during AAU deployment. As shown in FIG. 11, a maintenance terminal stores the longitude and latitude information of the AAU obtained through survey. The maintenance terminal sends the longitude and latitude information of the AAU to the maintenance interface of the AAU, and the AAU receives the longitude and latitude information of the AAU through the maintenance interface.

The AAU is deployed near the BBU. For example, a distance between the AAU and an antenna of the GNSS receiver of the BBU is within 1 km. The BBU and AAU are directly connected through an optical fiber.

During site deployment, the BBU and the AAU establish a communication link through a fronthaul interface (eCPRI or CPRI). The BBU obtains the longitude and latitude information of the AAU from the AAU. For example, as shown in FIG. 12, the BBU selects an AAU 1 from an AAU 1, an AAU 2, and an AAU 3 as a reference data source for determining whether a GNSS receiver is trusted, the AAU sends stored longitude and latitude information (x1, y1) to the BBU through a fronthaul interface, and the BBU obtains the longitude and latitude information (x1, y1) of the AAU.

Optionally, the AAU sends the longitude and latitude information to the BBU by using a management packet of the synchronization plane 1588 protocol. For example, if the longitude and latitude information of the AAU is sent by using a management packet (for example, a management packet in the 1588 protocol), the longitude and latitude information of the AAU and other information obtained by the GNSS receiver are optionally encapsulated in a same management packet. For example, a format of a management packet that carries the longitude and latitude information of the AAU and other information obtained by the GNSS receiver is shown in Table 1.

**Table 1**

| Fields in the management packet | Byte count (octests) | TLV offset (TLV offset) |
|---|---|---|
| TLV type (TLV Type) | 2 | 0 |
| TLV length (length Field) | 2 | 2 |
| Whether the GNSS receiver is integrated | 2 | 6 |
| User-configured location (longitude and latitude) information | 2 | 8 |
| UTC time obtained by the GNSS | 4 | 12 |
| Date obtained by the GNSS | 2 | 14 |
| Month obtained by the GNSS | 2 | 16 |
| Location (longitude and latitude) information obtained by the GNSS | 2 | 18 |
| Height information obtained by the GNSS | 2 | 20 |
| Other information obtained by the GNSS | Xx | Xx |
| Check code | 2 | Xx+2 |

If the foregoing information is carried in another packet other than the management packet between the AAU and the BBU, a format of the packet carrying the information may not be limited to the fields listed in Table 1.

The BBU compares the obtained longitude and latitude information (x1, y1) of the AAU with longitude and latitude information (x2, y2) obtained by the GNSS receiver integrated into the BBU. The BBU then calculates a straight-line distance L between the longitude and latitude information (x1, y1) and the longitude and latitude information (x2, y2). The distance L represents a distance between the accurate geographical location of the AAU 1 and the geographical location that is of the GNSS receiver and that is determined by the GNSS receiver.

If the GNSS receiver is spoofed by a pseudo satellite, the location information output by the GNSS receiver is greatly deviated. In this case, the distance L is greater than a proper distance (for example, 1 km). Based on this determination, the BBU considers that the output data of the GNSS receiver is untrusted, and the BBU avoids tracing an incorrect reference source by selecting another reference source or the like, thereby avoiding service interference.

In another possible implementation, the BBU comprehensively determines distances between survey locations of all the AAUs and the location obtained by the GNSS receiver of the BBU. If the distances between the survey locations of all AAUs and the location obtained by the GNSS receiver of the BBU are not within a proper range, or distances between survey locations of most AAUs and the location obtained by the GNSS receiver of the BBU are not within the proper range, the BBU considers that output data of the GNSS receiver is untrusted, and the BBU avoids tracing an incorrect reference source by selecting another reference source or the like, thereby avoiding service interference.

For example, the BBU obtains longitude and latitude information 1 reported by the AAU 1, longitude and latitude information 2 reported by the AAU 2, longitude and latitude information 3 reported by the AAU 3, and longitude and latitude information 4 output by the GNSS receiver. The BBU then obtains a distance a between the longitude and latitude information 1 and the longitude and latitude information 4, a distance b between the longitude and latitude information 2 and the longitude and latitude information 4, and a distance c between the longitude and latitude information 3 and the longitude and latitude information 4. The BBU then respectively determines whether the distance a is greater than a threshold, whether the distance b is greater than the threshold, and whether the distance c is greater than the threshold. If two of the distances a, b, and c are greater than the threshold, the BBU determines that the GNSS receiver is interfered by the longitude and latitude information. The locations reported by the plurality of AAUs are considered. Even if locations recorded by some AAUs are incorrect, locations provided by other AAUs can be used to ensure accuracy of the determination. Therefore, a location recording error of a specific AAU is excluded, improving the fault tolerance capability.

After the base station runs normally, the BBU checks the distance L between the location information output by the GNSS receiver and the location information of the AAU. If the distance L jumps, for example, the distance L exceeds 1 km, the BBU considers that the output data of the GNSS receiver is untrusted. In this case, the BBU avoids tracing an incorrect reference source by selecting a reference source other than the GNSS receiver or the like. If no other reference source is available, the base station enters the clock holdover mode to avoid service interference. Alternatively, after the base station runs normally, the BBU comprehensively checks distances between survey locations of all the AAUs and the location obtained by the GNSS receiver of the BBU. If all the distances are not within a proper range, or most distances are not within the proper range, the BBU considers that output data of the GNSS receiver is untrusted, and the BBU avoids tracing an incorrect reference source by selecting another reference source or the like, thereby avoiding service interference.

When the base station is in the clock holdover mode, after a GNSS spoofing interference event disappears, the BBU checks a distance L between the location information output by the GNSS receiver and the location information of the selected AAU. If the distance L is within a proper range, the BBU considers that the output data of the GNSS receiver is normal, and the BBU resumes tracing the clock reference source, namely, the GNSS receiver, thereby avoiding out-of-synchronization interference caused by exceeding the holdover capability.

In another possible implementation, when the base station is in the clock holdover mode, after the GNSS spoofing interference event disappears, the BBU comprehensively checks distances between survey locations of all the AAUs and the location obtained by the GNSS receiver of the BBU. If all the distances are within a proper range, or most distances are within the proper range, the BBU considers that the output data of the GNSS receiver is normal, and the BBU resumes tracing the clock reference source, namely, the GNSS receiver, thereby avoiding out-of-synchronization interference caused by exceeding the holdover capability.

The following describes a technical effect of example 1.

In the foregoing example 1, the BBU assists in determining a location spoofing interference event of the GNSS receiver by using accurate location information of the AAU. When the base station is deployed or restarted, the BBU can identify, by using the method in example 1, that the GNSS receiver is subject to location spoofing, and the BBU avoids tracing an incorrect reference source by selecting another reference source or the like, thereby avoiding service interference. When the base station is in the clock holdover mode, the BBU can identify, by using the method in example 1, that the location spoofing of the GNSS receiver disappears. The BBU resumes tracing the clock provided by the GNSS receiver to avoid service interference caused by exceeding holdover duration.

### Example 2

In a distributed base station, a GNSS receiver is deployed in a BBU for clock synchronization. During AAU deployment, the GNSS receiver is deployed in the AAU to obtain location information of the AAU. In an example scenario, to enable the AAU to generate a beam pointing to s terminal, a GNSS receiver is integrated into the AAU. The AAU obtains an accurate location of the AAU by using the GNSS receiver, and generates a beam based on the accurate location of the AAU by using a beamforming technology. In this scenario, not only the location provided by the GNSS receiver in the AAU is used to help the AAU perform beamforming, but also the location provided by the GNSS receiver in the AAU is used to help the BBU determine GNSS spoofing interference.

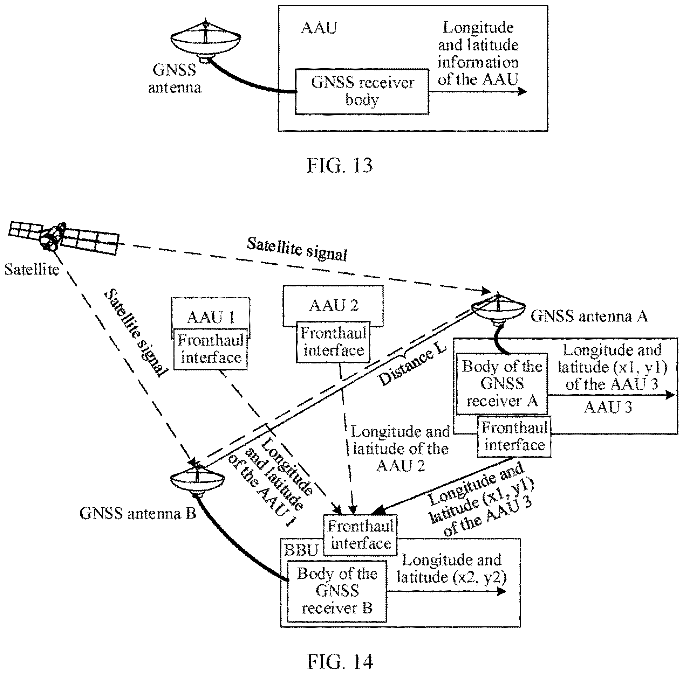

FIG. 13 is a schematic diagram of deploying a GNSS receiver in an AAU to obtain location information.

The AAU is deployed near a BBU. For example, a distance between an antenna of the GNSS receiver of the AAU and an antenna of a GNSS receiver of the BBU is within 1 km. The BBU and AAU are directly connected through an optical fiber.

During site deployment, the BBU and the AAU establish a communication link through a fronthaul interface (eCPRI or CPRI). The AAU obtains longitude and latitude information (x1, y1) of the AAU from the GNSS receiver attached to the AAU. The BBU obtains the longitude and latitude information of the AAU from the AAU. For example, the BBU selects an AAU from an AAU 1, an AAU 2, and an AAU 3. The AAU obtains the longitude and latitude information (x1, y1) by using the GNSS receiver of the AAU, and sends the longitude and latitude information (x1, y1) to the BBU through the fronthaul interface. The BBU obtains the longitude and latitude information (x1, y1) of the AAU.

The BBU compares the obtained longitude and latitude information (x1, y1) of the AAU with longitude and latitude information (x2, y2) obtained by the GNSS receiver integrated into the BBU. The BBU then calculates a straight-line distance L between the longitude and latitude information (x1, y1) and the longitude and latitude information (x2, y2). For example, with reference to FIG. 14, the BBU selects the AAU 3 in FIG. 14 as a reference data source for determining whether the GNSS receiver is trusted. A GNSS receiver A in the AAU 3 determines longitude and latitude information (x1, y1) of the GNSS receiver A. The longitude and latitude information (x1, y1) represents an accurate geographical location of the GNSS receiver A, and is equivalent to an accurate geographical location of the AAU 3. The AAU 3 sends the longitude and latitude information (x1, y1) provided by the GNSS receiver A to the BBU. A GNSS receiver B integrated into the BBU determines longitude and latitude (x2, y2) information of the GNSS receiver B. The longitude and latitude information (x2, y2) represents an accurate geographical location of the GNSS receiver A. The BBU calculates a straight-line distance L between the longitude and latitude information (x1, y 1) and the longitude and latitude information (x2, y2), where the distance L represents a distance between the geographical location of the GNSS receiver A and the geographical location of the GNSS receiver B.

If the GNSS receiver is spoofed by a pseudo satellite, the location information output by the GNSS receiver is greatly deviated. In this case, the distance L is greater than a proper distance (for example, 1 km). Based on this determination, the BBU considers that the output of the GNSS receiver is untrusted, and the BBU avoids tracing an incorrect reference source by selecting another reference source, thereby avoiding service interference. In another possible implementation, the BBU comprehensively determines distances between location information output by GNSS receivers attached to all AAUs and the location obtained by the GNSS receiver of the BBU. If all the distances are not within a proper range, or distances of most AAUs are not within the proper range, the BBU considers that output of the GNSS receiver is untrusted, and the BBU avoids tracing an incorrect reference source by selecting another reference source or the like, thereby avoiding service interference.

After the base station runs normally, the BBU checks the distance L between the location information output by the GNSS receiver and the location information output by the GNSS receiver attached to the AAU. If the distance L jumps, for example, the distance L exceeds 1 km, the BBU considers that the output of the GNSS receiver is untrusted. In this case, the BBU avoids tracing an incorrect reference source by selecting a reference source other than the GNSS receiver or the like. If no other reference source is available, the BBU enters the clock holdover mode to avoid service interference. In another possible implementation, the BBU comprehensively checks distances between location information output by GNSS receivers attached to all AAUs and the location information obtained by the GNSS receiver of the BBU. If all the distances are not within a proper range, or distances of most AAUs are not within the proper range, the BBU considers that output of the GNSS receiver is untrusted, and the BBU avoids tracing an incorrect reference source by selecting another reference source other than the GNSS receiver or the like, thereby avoiding service interference.

In the clock holdover mode, after a GNSS spoofing interference event disappears, the BBU checks the distance L between the location information output by the GNSS receiver and the location information output by the GNSS receiver attached to the AAU. If the distance L is within a proper range, the BBU considers that the output of the GNSS receiver is normal, and the BBU resumes tracing the clock reference source, namely, the GNSS receiver, thereby avoiding out-of-synchronization interference caused by exceeding the holdover capability.

In another possible implementation, in the clock holdover mode, after the GNSS spoofing interference event disappears, the BBU comprehensively checks distances between location information output by GNSS receivers attached to all AAUs and the location information obtained by the GNSS receiver of the BBU. If all the distances are within a proper range, or distances of most AAUs are within the proper range, the BBU considers that the output data of the GNSS receiver is normal, and the BBU resumes tracing the clock reference source, namely, the GNSS receiver, thereby avoiding out-of-synchronization interference caused by exceeding the holdover capability.

The following describes a technical effect of example 2.

In the foregoing example 2, the BBU assists in determining a location spoofing interference event of the GNSS receiver by using the location information output by the GNSS receiver attached to the AAU. In this solution, when the GNSS receiver deployed in the BBU is interfered, but the GNSS receiver deployed in the AAU is not interfered, whether the GNSS receiver deployed in the BBU is interfered can be accurately determined. Because a deployment location of the BBU is lower than a deployment location of the AAU, the GNSS receiver of the BBU is more likely to be interfered than a GNSS receiver deployed in an AAU on a tower or a rooftop. Therefore, in actual application, in this solution, whether the GNSS receiver deployed in the BBU is interfered can be effectively determined.

When the base station is deployed or restarted, the BBU can identify, by using the method in example 2, that the GNSS receiver is subject to location spoofing, and the BBU avoids tracing an incorrect reference source by selecting another reference source or the like, thereby avoiding service interference.

In the clock holdover mode, the BBU can identify, by using the method in example 2, that the location spoofing of the GNSS receiver disappears., and the BBU resumes tracing the clock provided by the GNSS receiver, to avoid service interference caused by exceeding holdover duration.

### Example 3

Example 3 shows a scenario in which a fronthaul network and a backhaul network are connected to different network management devices. In example 3, optionally, a network administrator inputs location information of an AAU into the network management device of the fronthaul network, and then the network management device sends the location information of the AAU to the AAU, but does not necessarily input the location information of the AAU into the AAU on site. The BBU obtains the location information of the AAU from the AAU through the fronthaul network.

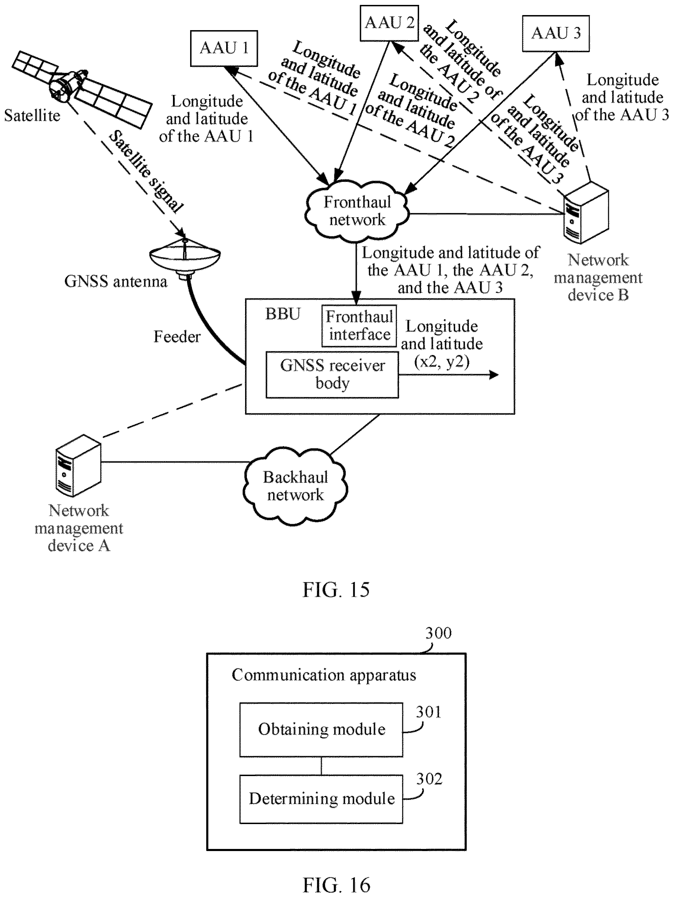

In a distributed base station, a GNSS receiver is deployed in a BBU for clock synchronization. The BBU is connected to a network management device A. AAUs are respectively connected to the fronthaul network and the network management device B. FIG. 15 is a schematic diagram in which a BBU and an AAU are respectively connected to different network management devices. As shown in FIG. 15, each of an AAU 1, an AAU 2, and an AAU 3 is connected to a network management device B, and each of the AAU 1, the AAU 2, and the AAU 3 is connected to a fronthaul network.

During installation and deployment of the AAU, accurate longitude and latitude information of the AAU is input into the AAU through the network management device B, where the accurate longitude and latitude information of the AAU is obtained through site survey. For example, as shown in FIG. 15, the network management device B sends longitude and latitude information of the AAU 1 to the AAU 1, sends longitude and latitude information of the AAU 2 to the AAU 2, and sends longitude and latitude information of the AAU 3 to the AAU 3.

The AAU is deployed near the BBU. For example, a distance between a location of the AAU and a location of an antenna of a GNSS receiver of the BBU is within 1 km. When the BBU obtains the location information of the AAU, the AAU sends, to the BBU through the fronthaul network, the location information previously sent by the network management device. For example, as shown in FIG. 15, the AAU 1 sends the longitude and latitude information of the AAU 1 to the BBU through the fronthaul network, the AAU 2 sends the longitude and latitude information of the AAU 2 to the BBU through the fronthaul network, and the AAU 3 sends the longitude and latitude information of the AAU 3 to the BBU through the fronthaul network.

During site deployment, the BBU and the AAU establish a communication link through the fronthaul interface (for example, an eCPRI). The BBU obtains the longitude and latitude information of the AAU from the AAU. For example, the BBU selects an AAU from the AAU 1, the AAU 2, and the AAU 3, and longitude and latitude information of the AAU is (x1, y1).

The BBU compares the obtained longitude and latitude information (x1, y1) of the AAU with longitude and latitude information (x2, y2) obtained by the GNSS receiver integrated into the BBU. The BBU then calculates a straight-line distance L between the longitude and latitude information (x1, y1) and the longitude and latitude information (x2, y2). If the GNSS receiver is spoofed by a pseudo satellite, the location information output by the GNSS receiver is greatly deviated. In this case, the distance L is greater than a proper distance (for example, 1 km). Based on this determination, the BBU considers that the output data of the GNSS receiver is untrusted, and the BBU avoids tracing an incorrect reference source by selecting another reference source or the like, thereby avoiding service interference.

In another possible implementation, the BBU comprehensively determines distances between survey locations of all the AAUs and the location obtained by the GNSS receiver of the BBU. If all the distances are not within a proper range, or distances of most AAUs are not within the proper range, the BBU considers that output data of the GNSS receiver is untrusted, and the BBU avoids tracing an incorrect reference source by selecting another reference source or the like, thereby avoiding service interference.

After the base station runs normally, the BBU checks the distance L between the location information output by the GNSS receiver and the location information of the AAU. If the distance L jumps, for example, the distance L exceeds 1 km, the BBU considers that the output of the GNSS receiver is untrusted. In this case, the BBU avoids tracing an incorrect reference source by selecting a reference source or the like. If no other reference source is available, the BBU enters the clock holdover mode to avoid service interference.

In another possible implementation, the BBU comprehensively checks distances between survey locations of all the AAUs and the location obtained by the GNSS receiver of the BBU. If all the distances are not within a proper range, or distances of most AAUs are not within the proper range, the BBU considers that output data of the GNSS receiver is untrusted, and the BBU avoids tracing an incorrect reference source by selecting another reference source or the like, thereby avoiding service interference.

When the base station is in the clock holdover mode, after a GNSS spoofing interference event disappears, the BBU checks a distance L between the location information output by the GNSS receiver and the location information of the AAU. If the distance L is within a proper range, the BBU considers that the output data of the GNSS receiver is normal, and the BBU resumes tracing the clock reference source, namely, the GNSS receiver, thereby avoiding out-of-synchronization interference caused by exceeding the holdover capability.

In another possible implementation, when the base station is in the clock holdover mode, after the GNSS spoofing interference event disappears, the BBU comprehensively checks distances between survey locations of all the AAUs and the location obtained by the GNSS receiver of the BBU. If all the distances are within a proper range, or distances of most AAUs are within the proper range, the BBU considers that the output data of the GNSS receiver is normal, and the BBU resumes tracing the clock reference source, namely, the GNSS receiver, thereby avoiding out-of-synchronization interference caused by exceeding the holdover capability.

The following describes a technical effect of example 3.

In the foregoing example 3, the BBU assists in determining a location spoofing interference event of the GNSS receiver by using accurate location information of the AAU. When the base station is deployed or restarted, the BBU can identify, by using the method in example 3, that the GNSS receiver is subject to location spoofing, and the BBU avoids tracing an incorrect reference source by selecting another reference source or the like, thereby avoiding service interference.

When the base station is in the clock holdover mode, the BBU can identify, by using the method in example 3, that the location spoofing of the GNSS receiver disappears. The BBU resumes tracing the clock provided by the GNSS receiver to avoid service interference caused by exceeding holdover duration.

With reference to the methods provided in the foregoing example 1 to example 3, in the foregoing examples, in the distributed base station, the GNSS receiver is integrated into the BBU, the AAU reports the accurate location of the AAU to the BBU through the fronthaul network, and the BBU calculates the distance between the output location of the GNSS receiver integrated into the BBU and the location reported by the AAU, and assists in determining, based on the distance within the proper range or jumping of the distance, whether the GNSS receiver integrated into the BBU is subject to location spoofing, thereby avoiding base station service interference.

For the problem that the GNSS receiver for clock synchronization on the BBU side of the distributed base station lacks an accurate reference location, and cannot identify whether a received signal is a spoofing interference signal or a normal signal, the foregoing example provides a technical solution in which location information of the AAU is used to assist in determining whether the GNSS receiver of the BBU is subject to location spoofing. By using this technical solution, the base station can accurately determine whether the GNSS receiver used by the BBU for time serving is subject to location spoofing, thereby avoiding service interference and improving clock synchronization reliability of the base station.

The foregoing example is described by using the scenario in which the example is applied inside the distributed base station and the location information of the AAU is obtained through the fronthaul network to assist in determining location spoofing interference of the GNSS receiver of the BBU. For another similar scenario, refer to the foregoing example.

The foregoing example is described by using an example in which the GNSS receiver used to support clock synchronization of the distributed base station is deployed on the BBU side. In some other embodiments, the GNSS receiver used to support clock synchronization of the distributed base station is deployed on the AAU side, and the BBU uses the GNSS receiver in the AAU as a clock synchronization reference source.

For example, a GNSS receiver is deployed in the AAU, and the AAU locally stores accurate location information of the AAU. The AAU obtains the location information output by the GNSS receiver and the location information pre-stored by the AAU, to obtain two pieces of location information. In a possible implementation, the AAU sends the two pieces of location information to the BBU. The BBU receives the two pieces of location information from the AAU. The BBU calculates the distance between the two pieces of location information, and determines whether time serving information provided by the GNSS receiver in the AAU is available based on whether the distance is greater than a threshold. In another possible implementation, the AAU calculates a distance between two pieces of location information, and the AAU sends the distance to the BBU. The BBU receives the distance, and determines whether time serving information provided by the GNSS receiver in the AAU is available based on whether the distance is greater than a threshold. In yet another possible implementation, the AAU calculates the distance between the two pieces of location information, and determines whether time serving information provided by the GNSS receiver in the AAU is available based on whether the distance is greater than a threshold. Optionally, when the AAU determines that the time serving information provided by the GNSS receiver in the AAU is unavailable, the AAU generates a notification message and sends the notification message to the BBU. The notification message indicates that the time serving information provided by the time serving receiver in the AAU is unavailable. The BBU receives the notification message from the AAU, and stops using, based on the notification message, the time serving information provided by the time serving receiver in the AAU to perform clock synchronization.

The foregoing enumerated implementations are all possible implementations in this embodiment. In this embodiment, whether the GNSS receiver is deployed in the BBU or the AAU in the distributed base station is not limited, and whether the steps in the process from obtaining the location to determining whether the time serving information is available are performed by the BBU or the AAU is not limited either.

The foregoing example is described by using an example in which the GNSS receiver sends geographical location information such as longitude and latitude information (x2, y2) to the BBU. In some other embodiments, the GNSS receiver sends clock information to the BBU. The BBU calculates the longitude and latitude information (x2, y2) based on the clock information, and determines the distance L based on the calculated longitude and latitude information (x2, y2) and longitude and latitude information (x1, y1) of the AAU.

The foregoing example is described by using an example in which the GNSS receiver used by the base station to perform clock synchronization is integrated into the BBU. In some other embodiments, the GNSS receiver and the BBU are separately disposed, and the GNSS receiver and the BBU exchange information through a network and a corresponding communication interface.

The foregoing example is described by using an example in which the BBU obtains the location information from the AAU to determine whether the GNSS receiver is trusted. In some other embodiments, the BBU obtains time information from the AAU to determine whether the GNSS receiver is trusted. For example, a GNSS receiver is integrated into each AAU, and each AAU obtains time information from the GNSS receiver of the AAU, and sends the time information to the BBU through the fronthaul network. The BBU performs, based on the time information provided by the plurality of AAUs, majority decision on the time information output by the GNSS receiver in the BBU. If the time information output by the GNSS receiver in the BBU is different from the time information of more than two AAUs, the BBU determines that the GNSS receiver of the BBU is untrusted. For a format of the time information transmitted between the AAU and the BBU, refer to the foregoing format of the location information.

FIG. 16 is a schematic diagram of a structure of a communication apparatus 300 according to an embodiment of this application. The communication apparatus 300 includes an obtaining module 301 and a determining module 302.

Optionally, with reference to the application scenario shown in FIG. 2, the communication apparatus 300 shown in FIG. 16 is disposed in the baseband unit 101 in FIG. 2.

Optionally, with reference to FIG. 3, the communication apparatus 300 shown in FIG. 16 is disposed in the baseband unit in FIG. 3. The communication apparatus 300 shown in FIG. 16 is configured to support the baseband unit in performing the steps in the method embodiment shown in FIG. 3. The obtaining module 301 is configured to support the communication apparatus 300 in performing S203 and S206. The determining module 302 is configured to support the communication apparatus 300 in performing S207.

Optionally, with reference to FIG. 4, the communication apparatus 300 shown in FIG. 16 is disposed in the BBU in FIG. 4.

Optionally, with reference to FIG. 5, the communication apparatus 300 shown in FIG. 16 is disposed in the BBU in FIG. 5.

Optionally, with reference to FIG. 7, the communication apparatus 300 shown in FIG. 16 is disposed in the BBU in FIG. 7.

Optionally, with reference to FIG. 8, the communication apparatus 300 shown in FIG. 16 is disposed in the BBU in FIG. 8.

Optionally, with reference to FIG. 9, the communication apparatus 300 shown in FIG. 16 is disposed in the BBU in FIG. 9.

Optionally, with reference to FIG. 10, the communication apparatus 300 shown in FIG. 16 is disposed in the BBU in FIG. 10, for example, disposed in the base station clock processing unit in FIG. 10.

Optionally, with reference to FIG. 12, the communication apparatus 300 shown in FIG. 16 is disposed in the BBU in FIG. 12.

Optionally, with reference to FIG. 14, the communication apparatus 300 shown in FIG. 16 is disposed in the BBU in FIG. 14.

Optionally, with reference to FIG. 15, the communication apparatus 300 shown in FIG. 16 is disposed in the BBU in FIG. 15.

The apparatus embodiment described in FIG. 16 is merely an example. For example, the module division is merely logical function division and may be other division during actual implementation. For example, a plurality of modules or components may be combined or integrated into another system, or some features may be ignored or not performed. Functional modules in embodiments of this application may be integrated into one processing module, or each module may exist alone physically, or two or more modules may be integrated into one module.

All or some of the modules in the communication apparatus 300 are implemented by using software, hardware, firmware, or any combination thereof.

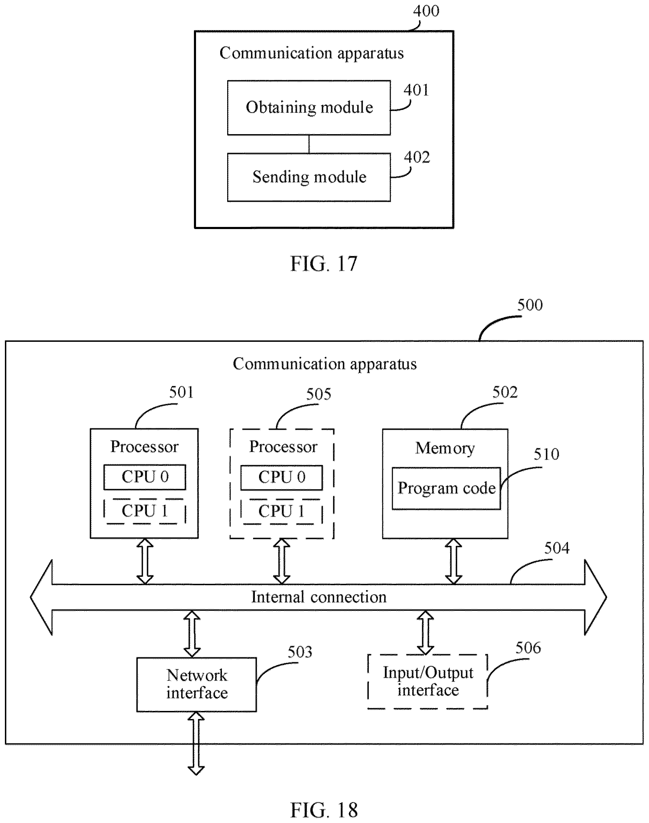

In a case in which software is used for implementation, for example, the foregoing determining module 302 is implemented by a software functional module generated after a processor 501 in FIG. 18 reads program code 510 stored in a memory 502.

In a case in which hardware is used for implementation, for example, the modules in FIG. 16 are separately implemented by different hardware. For example, the determining module 302 is implemented by a part of processing resources (for example, one or two cores in a multi-core processor) in the processor 501 in FIG. 18, or the determining module 302 is implemented by a programmable device such as a field programmable gate array (field-programmable gate array, FPGA) or a coprocessor. The obtaining module 301 is implemented by a network interface 503 and/or an input/output interface 506 in FIG. 18.

FIG. 17 is a schematic diagram of a structure of a communication apparatus 400 according to an embodiment of this application. The communication apparatus 400 shown in FIG. 17 is configured to support a radio frequency module in performing the steps in the foregoing method embodiments. The communication apparatus 400 includes an obtaining module 401 and a sending module 402.

Optionally, with reference to the application scenario shown in FIG. 2, the communication apparatus 400 shown in FIG. 17 is the radio frequency module 102 in FIG. 2.

Optionally, with reference to FIG. 3, the communication apparatus 400 shown in FIG. 17 is the radio frequency module in FIG. 3. The obtaining module 401 is configured to support the communication apparatus 400 in performing S201. The sending module 402 is configured to support the communication apparatus 400 in performing S202.

Optionally, with reference to FIG. 5, the communication apparatus 400 shown in FIG. 17 is the AAU 1, the AAU 2, or the AAU 3 in FIG. 5.

Optionally, with reference to FIG. 7, the communication apparatus 400 shown in FIG. 17 is the AAU 1, the AAU 2, or the AAU 3 in FIG. 7.

Optionally, with reference to FIG. 8, the communication apparatus 400 shown in FIG. 17 is the AAU 1, the AAU 2, or the AAU 3 in FIG. 8.

Optionally, with reference to FIG. 9, the communication apparatus 400 shown in FIG. 17 is the AAU 1, the AAU 2, or the AAU 3 in FIG. 9.

Optionally, with reference to FIG. 11, the communication apparatus 400 shown in FIG. 17 is the AAU in FIG. 11.

Optionally, with reference to FIG. 12, the communication apparatus 400 shown in FIG. 17 is the AAU 1, the AAU 2, or the AAU 3 in FIG. 12.

Optionally, with reference to FIG. 13, the communication apparatus 400 shown in FIG. 17 is the AAU in FIG. 13.

Optionally, with reference to FIG. 14, the communication apparatus 400 shown in FIG. 17 is the AAU 1, the AAU 2, or the AAU 3 in FIG. 14.

Optionally, with reference to FIG. 15, the communication apparatus 400 shown in FIG. 17 is the AAU 1, the AAU 2, or the AAU 3 in FIG. 15.

The apparatus embodiment described in FIG. 17 is merely an example. For example, the module division is merely logical function division and may be other division during actual implementation. For example, a plurality of modules or components may be combined or integrated into another system, or some features may be ignored or not performed. Functional modules in embodiments of this application may be integrated into one processing module, or each module may exist alone physically, or two or more modules may be integrated into one module.

All or some of the modules in the communication apparatus 400 are implemented by using software, hardware, firmware, or any combination thereof.

In a case in which software is used for implementation, for example, the obtaining module 401 is implemented by a software functional module generated after at least one processor 501 in FIG. 18 reads the program code stored in the memory 502.

In a case in which hardware is used for implementation, for example, the modules in FIG. 17 are separately implemented by different hardware. For example, the obtaining module 401 is implemented by a part of processing resources (for example, one core or two cores in a multi-core processor) in at least one processor 501 in FIG. 18; or the obtaining module 401 is implemented by using a programmable device such as a field programmable gate array (field-programmable gate array, FPGA) or a coprocessor; or the obtaining module 401 is implemented by using the network interface 503 and/or the input/output interface 506. The sending module 402 is implemented by the network interface 503 and/or the input/output interface 506 in FIG. 18.

FIG. 18 is a schematic diagram of a structure of a communication apparatus 500 according to an embodiment of this application. The communication apparatus 500 includes at least one processor 501, a memory 502, and at least one network interface 503.

Optionally, with reference to the application scenario shown in FIG. 2, the communication apparatus 500 shown in FIG. 18 is the baseband unit 101 or the radio frequency unit 102 in FIG. 2.

Optionally, with reference to FIG. 3, the communication apparatus 500 shown in FIG. 18 is the baseband unit in FIG. 3. The communication apparatus 500 shown in FIG. 18 is configured to perform the steps performed by the baseband unit in the method embodiment shown in FIG. 3. The network interface 503 is configured to perform S203. The processor 501 is configured to perform S207. Optionally, the network interface 503 is further configured to perform S206; or the input/output interface 506 is configured to perform S206.

Alternatively, the communication apparatus 500 shown in FIG. 18 is the radio frequency unit in FIG. 3. The communication apparatus 500 shown in FIG. 18 is configured to perform the steps performed by the radio frequency unit in the method embodiment shown in FIG. 3. The network interface 503 is configured to perform S202. Optionally, the network interface 503 is further configured to perform S201; or the input/output interface 506 is configured to perform S201. Alternatively, the processor 501 is configured to perform S201.

Optionally, with reference to FIG. 4, the communication apparatus 500 shown in FIG. 18 is the BBU in FIG. 4.

Optionally, with reference to FIG. 5, the communication apparatus 500 shown in FIG. 18 is the BBU, the AAU 1, the AAU 2, or the AAU 3 in FIG. 5.

Optionally, with reference to FIG. 7, the communication apparatus 500 shown in FIG. 18 is the BBU, the AAU 1, the AAU 2, or the AAU 3 in FIG. 7.

Optionally, with reference to FIG. 8, the communication apparatus 500 shown in FIG. 18 is the BBU, the AAU 1, the AAU 2, or the AAU 3 in FIG. 8.

Optionally, with reference to FIG. 9, the communication apparatus 500 shown in FIG. 18 is the BBU, the AAU 1, the AAU 2, or the AAU 3 in FIG. 9.

Optionally, with reference to FIG. 10, the communication apparatus 500 shown in FIG. 18 is the BBU in FIG. 10, for example, the base station clock processing unit in FIG. 10.

Optionally, with reference to FIG. 12, the communication apparatus 500 shown in FIG. 18 is the BBU, the AAU 1, the AAU 2, or the AAU 3 in FIG. 12.

Optionally, with reference to FIG. 14, the communication apparatus 500 shown in FIG. 18 is the BBU, the AAU 1, the AAU 2, or the AAU 3 in FIG. 14.

Optionally, with reference to FIG. 15, the communication apparatus 500 shown in FIG. 18 is the BBU, the AAU 1, the AAU 2, or the AAU 3 in FIG. 15.

The processor 501 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 501 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), generic array logic (generic array logic, GAL), or any combination thereof.

The memory 502 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, and the like), a magnetic disk storage medium or another magnetic storage device, or any other medium that can be used to carry or store expected program code in a form of instructions or a data structure and that can be accessed by a computer, but is not limited thereto. Optionally, the memory 502 exists independently, and is connected to the processor 501 by using an internal connection 504. Alternatively, the memory 502 and the processor 501 are optionally integrated together.

The network interface 503 uses any apparatus such as a transceiver, and is configured to communicate with another device or a communication network. The network interface 503 includes, for example, at least one of a wired network interface or a wireless network interface. The wired network interface is, for example, an Ethernet interface. The Ethernet interface is, for example, an optical interface, an electrical interface, or a combination thereof. The wireless network interface is, for example, a wireless local area network (wireless local area networks, WLAN) interface, a cellular network interface, or a combination thereof.

In some embodiments, the processor 501 includes one or more CPUs, such as a CPU 0 and a CPU 1 shown in FIG. 18.

In some embodiments, the communication apparatus 500 optionally includes a plurality of processors, for example, a processor 501 and a processor 505 shown in FIG. 18. Each of these processors is, for example, a single-core processor (single-CPU), or a multi-core processor (multi-CPU). The processor herein optionally refers to one or more devices, circuits, and/or processing cores configured to process data (for example, computer program instructions).

In some embodiments, the communication apparatus 500 further includes the internal connection 504. The processor 501, the memory 502, and the at least one network interface 503 are connected through the internal connection 504. The internal connection 504 includes a path for transferring information between the foregoing components. Optionally, the internal connection 504 is a board or a bus. Optionally, the internal connection 504 is classified into an address bus, a data bus, a control bus, and the like.

In some embodiments, the communication apparatus 500 further includes an input/output interface 506. The input/output interface 506 is connected to the internal connection 504.

In some embodiments, the input/output interface 506 is configured to connect to an input device, and receive a command or data that is input by a user by using the input device and that is related to the foregoing method embodiment, for example, geographical location information of a radio frequency unit. The input device includes but is not limited to a keyboard, a touchscreen, a microphone, a mouse, a sensing device, or the like.

In some embodiments, the input/output interface 506 is further configured to connect to an output device. The input/output interface 506 outputs, by using the output device, an intermediate result and/or a final result generated by the processor 301 by performing the foregoing method embodiment, for example, whether clock information is available. The output device includes, but is not limited to a display, a printer, a projector, and the like.

Optionally, the processor 501 implements the method in the foregoing embodiment by reading the program code 510 stored in the memory 502, or the processor 501 implements the method in the foregoing embodiment by using internally stored program code. When the processor 501 implements the method in the foregoing embodiments by reading the program code stored in the memory 502, the memory 502 stores program code 510 for implementing the foregoing method embodiments provided in embodiments of this application.

For more details about implementing the foregoing functions by the processor 501, refer to the descriptions in the foregoing method embodiments. Details are not described herein again.

Embodiments in this specification are described in a progressive manner. For same or similar parts in embodiments, refer to each other. Each embodiment focuses on a difference from other embodiments.

A refers to B, which means that A is the same as B or A is a simple variant of B.

In the specification and claims of embodiments of this application, the terms "first", "second", and the like are intended to distinguish between different objects but do not indicate a particular order of the objects, and cannot be understood as an indication or implication of relative importance.

In embodiments of this application, unless otherwise specified, "at least one" means one or more, and " a plurality of" means two or more. For example, a plurality of radio frequency units refers to two or more radio frequency units.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid State Disk (SSD)), or the like.

The foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A method for checking clock information, wherein the method comprises:
obtaining first information through a time serving unit of a communication system;
obtaining information about at least one radio frequency unit of the communication system; and
determining, based on the information about the at least one radio frequency unit and the first information, whether the clock information provided by the time serving unit is available.

2. The method according to claim 1, wherein the information about the radio frequency unit is geographical location information of the radio frequency unit; and
the first information is geographical location information obtained by the time serving unit based on a signal received by the time serving unit.

3. The method according to claim 1, wherein the information about the radio frequency unit is clock information of the radio frequency unit; and
the first information is clock information obtained by the time serving unit based on a signal received by the time serving unit.

4. The method according to claim 3, wherein the clock information of the radio frequency unit or the clock information provided by the time serving unit comprises at least one of time information, frequency information, or phase information.

5. The method according to any one of claims 1 to 4, wherein the determining, based on the information about the at least one radio frequency unit and the first information, whether the clock information provided by the time serving unit is available comprises:
obtaining at least one deviation based on the information about the at least one radio frequency unit and the first information; and
determining, based on the at least one deviation and a threshold, whether the clock information provided by the time serving unit is available.

6. The method according to claim 5, wherein the determining, based on the information about the at least one radio frequency unit and the first information, whether the clock information provided by the time serving unit is available comprises any one of and a combination of the following:
determining, based on a fact that each deviation in the at least one deviation is greater than the threshold, that the clock information provided by the time serving unit is unavailable;
determining, based on a fact that one of the at least one deviation is greater than the threshold, that the clock information provided by the time serving unit is unavailable;
determining, based on a fact that deviations greater than the threshold in the at least one deviation reach a set proportion, that the clock information provided by the time serving unit is unavailable; or
determining, based on a fact that deviations greater than the threshold in the at least one deviation reach a set quantity, that the clock information provided by the time serving unit is unavailable.

7. The method according to claim 5 or 6, wherein the deviation comprises at least one of a spatial distance, a time difference, a frequency deviation, or a phase deviation.

8. The method according to any one of claims 1 to 7, wherein the obtaining first information through a time serving unit of a communication system comprises any one of and a combination of the following:
receiving the first information output by the time serving unit; or
determining the first information based on information output by the time serving unit.

9. The method according to any one of claims 1 to 8, wherein the obtaining information about at least one radio frequency unit of the communication system comprises any one of and a combination of the following:
receiving the information about the at least one radio frequency unit from the at least one radio frequency unit; or
receiving the information about the at least one radio frequency unit from a network management device.

10. The method according to any one of claims 1 to 9, wherein after the determining, based on the information about the at least one radio frequency unit and the first information, whether the clock information provided by the time serving unit is available, the method further comprises any one of and a combination of the following:
using the clock information provided by the time serving unit if the clock information is available;
using clock information provided by another element other than the time serving unit if the clock information is unavailable; or
entering a clock holdover mode if the clock information is unavailable.

11. The method according to any one of claims 1 to 10, wherein the radio frequency unit and the time serving unit are deployed in a same base station.

12. The method according to any one of claims 1 to 10, wherein the radio frequency unit and the time serving unit are deployed in different base stations.

13. The method according to any one of claims 1 to 12, wherein the time serving unit is deployed in a baseband unit; or
the time serving unit is deployed in one of the at least one radio frequency unit.

14. A method for checking clock information, performed by a radio frequency unit in a communication system, wherein the method comprises:
obtaining information about the radio frequency unit; and
sending the information about the radio frequency unit to a baseband unit in the communication system, wherein the information about the radio frequency unit is used by the baseband unit to determine whether clock information provided by a first time serving unit in the communication system is available.

15. The method according to claim 14, wherein the information about the radio frequency unit is geographical location information of the radio frequency unit.

16. The method according to claim 15, wherein the obtaining information about the radio frequency unit comprises any one of and a combination of the following:
obtain the geographical location information of the radio frequency unit pre-stored in the radio frequency unit;
obtaining the geographical location information of the radio frequency unit through a second time serving unit;
receiving the geographical location information of the radio frequency unit from a network management device; or
obtaining the geographical location information of the radio frequency unit through a positioning unit.

17. The method according to claim 14, wherein the information about the radio frequency unit is clock information of the radio frequency unit.

18. The method according to claim 17, wherein the obtaining information about the radio frequency unit comprises:
obtaining the clock information of the radio frequency unit through a second time serving unit.

19. A communication apparatus, wherein the apparatus comprises:
an obtaining module, configured to obtain first information through a time serving unit of a communication system, wherein
the obtaining module is further configured to obtain information about at least one radio frequency unit of the communication system; and
a determining module, configured to determine, based on the information about the at least one radio frequency unit and the first information, whether the clock information provided by the time serving unit is available.

20. A communication apparatus, wherein the communication apparatus is disposed in a radio frequency unit, and the apparatus comprises:
an obtaining module, configured to obtain information about the radio frequency unit; and
a sending module, configured to send the information about the radio frequency unit to a baseband unit, wherein the information about the radio frequency unit is used by the baseband unit to determine whether clock information provided by a first time serving unit is available.

21. A communication apparatus, wherein the communication apparatus comprises a processor, the processor is coupled to a memory, the memory stores at least one computer program instruction, and the at least one computer program instruction is loaded and executed by the processor, so that the communication apparatus implements the method according to any one of claims 1 to 13 or claims 14 to 18.

22. A communication system, wherein the system comprises the communication apparatus according to claim 19 and the communication apparatus according to claim 20.

23. A computer-readable storage medium, wherein the storage medium stores at least one instruction, and when the instruction is run on a computer, the computer is enabled to perform the method according to any one of claims 1 to 13 or claims 14 to 18.

24. A computer program product, wherein the computer program product comprises one or more computer program instructions, and when the computer program instructions are loaded and run by a computer, the computer is enabled to perform the method according to any one of claims 1 to 13 or claims 14 to 18.
